# EUROPÄISCHE PATENTSCHRIFT

(11) **EP 4 173 072 B1**
(45) Veröffentlichungstag und Bekanntmachung des Hinweises auf die Patenterteilung: **23.07.2025**
(21) Anmeldenummer: 21732845.9
(22) Anmeldetag: 09.06.2021
(51) Int. Cl.: H01M 10/613, H01M 10/647, H01M 10/6553, H01M 10/6556, H01M 10/6567, H01M 50/503

(54) **BATTERIEZELLEN-VERBINDUNGSELEMENT, BATTERIEZELLEN-VERBINDUNGSMODUL, BATTERIEZELLEN-VERBINDUNGSANORDNUNG UND VERFAHREN ZUM TEMPERIEREN UND ELEKTRISCHEN KONTAKTIEREN VON BATTERIEZELLEN**
BATTERY CELL CONNECTION ELEMENT, BATTERY CELL CONNECTION MODULE, BATTERY CELL CONNECTION ASSEMBLY AND METHOD FOR CONTROLLING THE TEMPERATURE OF AND ELECTRICALLY CONTACTING BATTERY CELLS
ÉLÉMENT DE CONNEXION POUR ÉLÉMENTS DE BATTERIE, MODULE DE CONNEXION POUR ÉLÉMENTS DE BATTERIE, ENSEMBLE DE CONNEXION POUR ÉLÉMENTS DE BATTERIE ET PROCÉDÉ POUR TEMPÉRER ET METTRE EN CONTACT ÉLECTRIQUE DES ÉLÉMENTS DE BATTERIE

(30) Priorität: 24.06.2020 DE 102020116654
(43) Veröffentlichungstag der Anmeldung: 03.05.2023
(73) Patentinhaber: Witzenmann GmbH, 75175 Pforzheim (DE)
(72) Erfinder: EHRENBERGER, David, 75203 Königsbach-Stein (DE); LEIPPI, Alexander, 75173 Pforzheim (DE)
(74) Vertreter: LBP Lemcke, Brommer & Partner Patentanwälte mbB
(86) Internationale Anmeldenummer: PCT/EP2021/065464
(87) Internationale Veröffentlichungsnummer: WO 2021/259638

(56) Entgegenhaltungen:
- WO-A1-2018/021084
- DE-A1- 102018 110 527
- JP-A- 2011 029 103
- JP-A- 2012 216 360
- JP-A- 2014 195 392

## Beschreibung

Die Erfindung betrifft ein Batteriezellen-Verbindungselement gemäß Anspruch 1.

Weiterhin betrifft die Erfindung ein Batteriezellen-Verbindungsmodul gemäß Anspruch 3.

Die Erfindung betrifft auch eine Batteriezellen-Verbindungsanordnung, die wenigstens zwei erfindungsgemäße Batteriezellen-Verbindungselemente und wenigstens ein erfindungsgemäßes Batteriezellen-Verbindungsmodul umfasst, gemäß Anspruch 8.

Außerdem betrifft die Erfindung eine Batteriezellen-Anordnung mit mehreren Batteriezellen und mit einer erfindungsgemäßen Batteriezellen-Anordnung, gemäß Anspruch 11.

Schließlich betrifft die Erfindung auch ein Verfahren zum Temperieren und elektrischen Kontaktieren von Batteriezellen einer Batteriezellen-Anordnung gemäß Anspruch 13.

Insbesondere das Batteriezellen-Verbindungsmodul und das Batteriezellen-Verbindungselement werden im Folgenden abkürzend auch einfach als "Verbindungsmodul" bzw. als "Verbindungselement" bezeichnet.

Die Elektromobilität nimmt in der heutigen industriellen Entwicklung einen immer größeren Stellenwert ein. Um entsprechende elektrische Energie, beispielsweise zum Betreiben eines Traktionsmotors bei einem Automobil, zur Verfügung stellen zu können, werden eine Vielzahl von Batteriezellen benötigt, welche die entsprechende elektrische Energie zur Verfügung stellen. Dabei ist es regelmäßig erforderlich, die genannten Batteriezellen zu größeren Batteriezellen-Anordnungen elektrisch leitend zu verbinden. Zugleich erwärmen sich die genannten Batteriezellen insbesondere während ihres Betriebs stark, sodass es außerdem erforderlich ist, die Batteriezellen einer Batteriezellen-Anordnung zu temperieren bzw. zu kühlen. Es besteht also Bedarf an einer Möglichkeit, Batteriezellen der genannten Art sowohl elektrisch leitend als auch thermisch wirksam zu verbinden.

Um hierbei vorhandene Synergieeffekte auszunutzen, wurde bereits in der Vergangenheit vorgeschlagen, die elektrische Kontaktierung der Batteriezellen und deren Temperierung über eine Anordnung aus zumindest teilweise elektrisch leitfähigen Fluidleitungselementen zu realisieren. Ein entsprechender Ansatz ist beispielsweise in der DE 10 2018 109 421 A1 aus dem Hause der Anmelderin beschrieben.

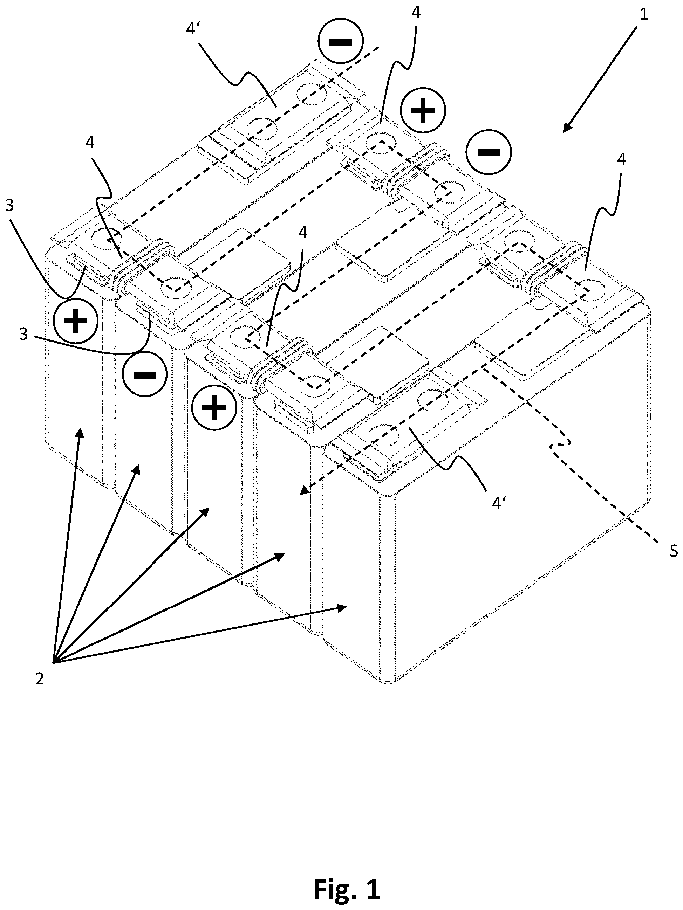

WO 2018/021084 A1 offenbart ein elektrisch leitendes Mittel mit einer Kühlfunktion, das in einer Batterieanordnung für ein Elektrofahrzeug Verwendung finden kann. Wie sich speziell aus der dortigen Figur 1 ergibt, weist ein Rohrelement endständig flachgedrückte, verschlossene Enden auf, die zur elektrischen Kontaktierung dienen. Seitlich sind Durchbrüche vorhanden, bei den Fluidanschlüsse seitlich abgezweigt werden. Dadurch benötigt das vorbekannte Mittel relativ viel Bauraum, sowohl in axialer als auch in seitlicher Richtung.

Die bislang in diesem Kontext entwickelten Konzepte haben sich in der praktischen Umsetzung als noch verbesserungsfähig erwiesen, weil sie insbesondere relativ viel Bauraum und eine relativ große Anzahl an Fertigungsschritten benötigen, was die entsprechenden Herstellverfahren zeit- und kostenaufwendig macht.

Der Erfindung liegt die Aufgabe zugrunde, hier Abhilfe zu schaffen und ein Batteriezellen-Verbindungselement, ein Batteriezellen-Verbindungsmodul, eine Batteriezellen-Verbindungsanordnung, eine Batteriezellen-Anordnung sowie ein Verfahren zum Temperieren und elektrischen Kontaktieren von Batteriezellen einer Batteriezellen-Anordnung zur Verfügung zu stellen, mit dem sich die vorstehend genannten Nachteile vermeiden lassen, um auf diese Weise zu einer zeit-und kostengünstigeren Fertigung von elektrischen Energiespeichern, insbesondere für Automobile, zu gelangen, die weniger Bauraum benötigen.

Die Aufgabe wird erfindungsgemäß gelöst durch ein Batteriezellen-Verbindungselement mit den Merkmalen des Anspruchs 1, durch ein Batteriezellen-Verbindungsmodul mit den Merkmalen des Anspruchs 3, durch eine Batteriezellen-Verbindungsanordnung mit den Merkmalen des Anspruchs 8, durch eine Batteriezellen-Anordnung mit den Merkmalen des Anspruchs 11 sowie durch ein Verfahren zum Temperieren und elektrischen Kontaktieren von Batteriezellen mit den Merkmalen des Anspruchs 13.

Vorteilhafte Weiterbildungen der erfindungsgemäßen Idee sind in den Unteransprüchen definiert.

Erfindungsgemäß umfasst ein Batteriezellen-Verbindungselement einen als Fluidleitungselement ausgebildeten Grundkörper aus einem elektrisch leitenden Werkstoff mit einer Längsachse, welcher Grundkörper an seinen beiden Enden fluiddicht verschlossen ist und eine umfänglich im Wesentlichen geschlossene Mantelwandung aufweist, in welcher Mantelwandung auf einer selben Seite des Grundkörpers wenigstens zwei Durchbrüche, vorzugsweise Ausstanzungen, angeordnet sind, welche Durchbrüche in Richtung der Längsachse versetzt nebeneinander angeordnet sind.

Eine erfindungsgemäße Ausgestaltung des Batteriezellen-Verbindungselements sieht weiterhin vor, dass der Grundkörper zumindest an seiner den Durchbrüchen gegenüberliegenden Seite abschnittweise im Wesentlichen eben ausgebildet ist, so dass ebene Abschnitte des Grundkörpers in einer Richtung quer zu der Längsachse mit den Durchbrüchen fluchten, wobei vorzugsweise der Grundkörper zwei abschnittweise im Wesentlichen ebene, parallel zueinander angeordnete Seitenwände aufweist, in einer von denen die Durchbrüche angeordnet sind. Äußerst vorzugsweise weist die andere, gegenüberliegende Seitenwand eine Gegenkontur (komplementäre Kontur) eines Batteriezellen-Ableiters auf, um das Batteriezellen-Verbindungselement möglichst gut mit dem Batteriezellen-Ableiter verbinden zu können.

Wenn der Grundkörper, wie beschrieben, auf seiner den Durchbrüchen gegenüberliegenden Seite abschnittsweise im Wesentlichen eben ausgebildet ist, wobei der Begriff "im Wesentlichen" übliche Fertigungstoleranzen mit einschließen soll, kann das Batteriezellen-Verbindungselement in besonders einfacher und sicherer Weise flächig mit Batteriezellen-Ableitern oder -Anschlusspolen verbunden werden, die ebenfalls im Wesentlichen eben ausgebildet sind. Wenn die genannten ebenen Abschnitte des Grundkörpers in einer Richtung quer zu der Längsachse mit den Durchbrüchen fluchten, ist eine geometrisch vorteilhafte Konfiguration geschaffen, weil bei (vorbekannten) Batteriezellen-Anordnungen in der Regel die Zellableiter benachbarter Batteriezellen auf einer Linie nebeneinander angeordnet sind.

Eine alternative Ausgestaltung des Batteriezellen-Verbindungselements umfasst einen als Fluidleitungselement ausgebildeten Grundkörper aus einem elektrisch leitenden Werkstoff mit einer Längsachse, welcher Grundkörper an seinen beiden Enden offen ausgebildet ist und eine umfänglich im Wesentlichen geschlossene Mantelwandung aufweist.

Auch eine Kombination aus beiden Ausgestaltungen des Batteriezellen-Verbindungselements mit offenen Enden und den genannten Durchbrüchen ist möglich: die Durchbrüche dienen zum Einführen eines (Schweiß-)Werkzeugs für die Anbindung der Verbindungselemente an elektrische Ableiter der Batteriezellen (dazu genauer weiter unten) und können nach erfolgter Montage verschlossen werden (mittels geeigneter Stopfen).

Ein erfindungsgemäßes Batteriezellen-Verbindungsmodul umfasst wenigstens zwei Aufnahmen, welche Aufnahmen zum formschlüssigen und/oder kraftschlüssigen Aufnehmen jeweils eines Batteriezellen-Verbindungselements ausgebildet sind, sowie einen Fluidleitungsabschnitt, welcher Fluidleitungsabschnitt eine Fluidzuleitung und eine Fluidausleitung aufweist, bei dem zumindest der Fluidleitungsabschnitt in einem elektrisch nichtleitenden Werkstoff, bevorzugt Kunststoff, ausgebildet ist und bei dem die Fluidzuleitung und die Fluidausleitung derart relativ zu den Aufnahmen angeordnet sind, dass die Fluidzuleitung mit der einen Aufnahme und die Fluidausleitung mit der anderen Aufnahme in fluidleitender Verbindung steht.

Eine erfindungsgemäße Batteriezellen-Verbindungsanordnung umfasst wenigstens ein erstes Batteriezellen-Verbindungselement, wenigstens ein zweites Batteriezellen-Verbindungselement und wenigstens ein Batteriezellen-Verbindungsmodul, wobei das erste Batteriezellen-Verbindungselement und das zweite Batteriezellen-Verbindungselement jeweils in einer betreffenden Aufnahme angeordnet sind, sodass einerseits das erste Batteriezellen-Verbindungselement mit einem seiner Durchbrüche mit der Fluidzuleitung und andererseits die Fluidausleitung mit einem der Durchbrüche des zweiten Batteriezellen-Verbindungselements in fluidleitender Verbindung steht oder sodass die beiden Batteriezellen-Verbindungselemente über einen ihrer Durchbrüche und über den Fluidleitungsabschnitt miteinander in fluidleitender Verbindung stehen, wobei in jedem Fall die beiden Batteriezellen-Verbindungselemente voneinander beabstandet sind, damit keine elektrisch leitenden Verbindung zwischen den Verbindungselementen besteht.

Wenn die alternative Ausgestaltung des Batteriezellen-Verbindungselements zum Einsatz kommt, umfasst eine entsprechend angepasste alternative Batteriezellen-Verbindungsanordnung wenigstens ein erstes (alternatives) Batteriezellen-Verbindungselement, wenigstens ein zweites (alternatives) Batteriezellen-Verbindungselement und wenigstens ein Batteriezellen-Verbindungsmodul, wobei das erste (alternative) Batteriezellen-Verbindungselement und das zweite (alternative) Batteriezellen-Verbindungselement jeweils in einer betreffenden Aufnahme angeordnet sind, sodass einerseits das erste (alternative) Batteriezellen-Verbindungselement mit einem seiner offenen Ende mit der Fluidzuleitung und andererseits die Fluidausleitung mit einem der offenen Enden des zweiten Batteriezellen-Verbindungselements in fluidleitender Verbindung steht oder sodass die beiden (alternativen) Batteriezellen-Verbindungselemente über jeweils eines ihrer offenen Enden und über den Fluidleitungsabschnitt miteinander in fluidleitender Verbindung stehen, wobei in jedem Fall die beiden (alternativen) Batteriezellen-Verbindungselemente durch den zwischengeschalteten Fluidleitungsabschnitt voneinander beabstandet sind, damit keine elektrisch leitenden Verbindung zwischen den (alternativen) Verbindungselementen besteht.

Eine erfindungsgemäße Batteriezellen-Anordnung umfasst mehrere Batteriezellen und eine, insbesondere alternative, Batteriezellen-Verbindungsanordnung, wobei die einzelnen Batteriezellen jeweils einen ersten Zellableiter mit einer ersten elektrischen Polung und einen zweiten Zellableiter mit einer zweiten elektrischen Polung aufweisen, bei der der erste Zellableiter einer Batteriezelle über ein, insbesondere alternatives, Batteriezellen-Verbindungselement mit dem zweiten Zellableiter einer anderen Batteriezelle elektrisch leitend verbunden ist, und bei der das erste, insbesondere alternative, Batteriezellen-Verbindungselement mit dem zweiten, insbesondere alternativen, Batteriezellen-Verbindungselement über den Fluidleitungsabschnitt des Batteriezellen-Verbindungsmoduls fluidleitend verbunden ist.

Ein erfindungsgemäßes Verfahren zum Temperieren und elektrischen Kontaktieren von Batteriezellen einer Batteriezellen-Anordnung beinhaltet:
a) Bereitstellen von wenigstens zwei, insbesondere alternativen, Batteriezellen-Verbindungselementen;
b) Bereitstellen von wenigstens einem Batteriezellen-Verbindungsmodul;
c) Anordnen der Batteriezellen-Verbindungselemente in dem Batteriezellen-Verbindungsmodul zum Schaffen einer, insbesondere alternativen, Batteriezellen-Verbindungsanordnung;
d) Herstellen der Batteriezellen-Anordnung durch Anbringen der, insbesondere alternativen, Batteriezellen-Verbindungsanordnung an einer Anordnung von Batteriezellen und elektrisch leitendes, vorzugsweise stoffschlüssiges Verbinden der, insbesondere alternativen, Batteriezellen-Verbindungselemente mit den Zellableitern;
e) Durchströmen der, insbesondere alternativen, Batteriezellen-Verbindungselemente und des Fluidleitungsabschnitts oder der Fluidleitungsabschnitte mit einem Temperierfluid; und
f) elektrisches Kontaktieren der Batteriezellen über die, insbesondere alternativen, Batteriezellen-Verbindungselemente.

Ausgangspunkt der vorliegenden Erfindung ist demnach das vorstehend definierte, insbesondere alternative, Batteriezellen-Verbindungselement, welches sowohl als elektrischer Verbinder als auch als Fluidleitungselement fungieren kann und entsprechend zum Leiten eines Temperierfluids für eine Batteriezellen-Anordnung geeignet ist. Dabei kann das erfindungsgemäße Batteriezellen-Verbindungselement aufgrund der Ausgestaltung seines Grundkörpers aus einem elektrisch leitenden Werkstoff zum Verbinden von elektrischen Anschlüssen (unterschiedlicher Polung) in einer Batteriezellen-Anordnung verwendet werden.

Die Erfindung umfasst allerdings auch Batteriezellen-Verbindungselemente, bei denen nicht der gesamte Grundkörper aus einem elektrisch leitenden Werkstoff besteht, sondern nur Teile davon. Die beiden Durchbrüche ermöglichen in einfacher Art und Weise ein (stoffschlüssiges) Verbinden des Batteriezellen-Verbindungselements mit den genannten elektrischen Anschlüssen einer Batteriezellen-Anordnung, weil durch die Durchbrüche hindurch ein entsprechend zu verwendendes Werkzeug eingeführt werden kann. Bei der alternativen Ausführungsform erfolgt vorzugsweise ein (stoffschlüssiges) Verbinden des Batteriezellen-Verbindungselements mit den genannten elektrischen Anschlüssen einer Batteriezellen-Anordnung mittels einer Kehlnaht zwischen einer (Außen-)Wandung des Verbindungselements und den genannten elektrischen Anschlüssen.

Das erfindungsgemäße Batteriezellen-Verbindungselement kann auf diese Weise dazu verwendet werden, Batteriezellen-Anordnungen in einfacher und kostengünstiger Weise aufzubauen. Hierauf wird weiter unten noch genauer eingegangen.

Vorteilhafterweise kann das erfindungsgemäße Batteriezellen-Verbindungselement, in seinen beiden Alternativen, mit einem erfindungsgemäßen Batteriezellen-Verbindungsmodul gemeinsam verwendet werden, welches Batteriezellen-Verbindungsmodul Aufnahmen zum Aufnehmen von erfindungsgemäßen Batteriezellen-Verbindungselementen aufweist. Auf diese Weise lässt sich durch das Zusammenwirken von Batteriezellen-Verbindungselement und Batteriezellen-Verbindungsmodul eine erfindungsgemäße Batteriezellen-Verbindungsanordnung schaffen, die in besonders einfacher und günstiger Weise die Herstellung von erfindungsgemäßen Batteriezellen-Anordnungen ermöglicht. Auch hierauf wird weiter unten noch genauer eingegangen. Im Rahmen der vorliegenden Erfindung besteht auf die Weise die Möglichkeit, durch ein Zusammenbringen von (wenigstens zwei) erfindungsgemäßen Batteriezellen-Verbindungselementen und wenigstens einem erfindungsgemäßen Batteriezellen-Verbindungsmodul eine vorkonfigurierte erfindungsgemäße Batteriezellen-Verbindungsanordnung zu schaffen, durch deren Verwendung sich elektrisch kontaktierbare und thermisch temperierbare Batteriezellen-Anordnungen besonders einfach herstellen lassen.

Auf diese Weise schafft die vorliegende Erfindung auch ein erfindungsgemäßes Verfahren zum Temperieren und elektrischen Kontaktieren von Batteriezellen einer Batteriezellen-Anordnung, welches Verfahren auf der vorstehend beschriebenen Verwendung von (wenigstens zwei) erfindungsgemäßen Batteriezellen-Verbindungselementen und einem erfindungsgemäßen Batteriezellen-Verbindungsmodul beruht, die zusammen eine erfindungsgemäße Batteriezellen-Verbindungsanordnung bilden.

Die nachfolgend beschriebenen Weiterbildungen des erfindungsgemäßen Batteriezellen-Verbindungselements gelten auch für dessen alternative Ausgestaltung, sofern sie sich nicht speziell auf die Durchbrüche als solche oder die fluiddicht verschlossenen Enden beziehen.

Eine andere Weiterbildung des erfindungsgemäßen Batteriezellen-Verbindungselements sieht vor, dass der Grundkörper, zumindest mit Ausnahme seiner (verschlossenen) Enden, einen ovalen Querschnitt aufweist. Eine solche Ausgestaltung hat sich fertigungstechnisch und auch im Hinblick auf den erforderlichen Bauraumbedarf als besonders günstig erwiesen. Vorteilhafterweise entsteht der ovale Querschnitt durch Ausbildung eines zentralen, rechteckigen Querschnitts mit angesetzten Halbkreisen und weist entsprechend die Form eines "Stadionovals" auf. Die Erfindung ist jedoch keinesfalls auf derartige Querschnitte des Grundkörpers beschränkt.

Bei wieder einer anderen Weiterbildung des erfindungsgemäßen Batteriezellen-Verbindungselements kann vorgesehen sein, dass der Grundkörper an seinen Enden flachgedrückt und/oder gefalzt und dadurch verschlossen ist. Zusätzlich kann der Grundkörper an seinen Enden stoffschlüssig verschlossen sein, insbesondere geschweißt oder gelötet. Auch hierdurch ergibt sich in besonders einfacher Weise ein im Rahmen der vorliegenden Erfindung vorteilhaft einsetzbares Batteriezellen-Verbindungselement nach Art eines stirnseitig geschlossenen Fluidleitungselements.

Um insbesondere Fertigungstoleranzen, Abmessungstoleranzen und thermische Geometrieänderungen ausgleichen zu können, sieht eine äußerst bevorzugte Weiterbildung des erfindungsgemäßen Batteriezellen-Verbindungselements sieht vor, dass der Grundkörper entlang seiner Längsachse zwei im Wesentlichen gleiche Hälften aufweist, zwischen denen ein Mittelabschnitt mit veränderter Formgebung angeordnet ist, welcher Mittelabschnitt vorzugsweise wenigstens eine umfänglich umlaufenden Balgwelle aufweist, höchst vorzugsweise mehrere solche Balgwellen, und dabei vorzugsweise einstückig mit dem restlichen Grundkörper ausgebildet ist.

Derartig Balgwellen oder Ringwellen sind dem Fachmann bekannt und werden seit Jahrzehnten bei flexiblen Metallschläuchen dazu verwendet, insbesondere thermisch induzierte Bewegungen und Verformungen aufzunehmen.

Noch eine andere Weiterbildung des erfindungsgemäßen Batteriezellen-Verbindungselements sieht vor, dass die Durchbrüche einen lichten Öffnungsquerschnitt aufweisen, der zum Einführen eines Werkzeugs, vorzugsweise eines Schweißwerkzeugs, geeignet ist, vorzugsweise einen lichten Öffnungsquerschnitt von etwa 5 mm bis etwa 30 mm. Es wurde bereits darauf hingewiesen, dass die genannten Durchbrüche vorteilhafterweise dazu verwendet werden können, ein Werkzeug in das Batteriezellen-Verbindungselement einzuführen, um dieses mit einem Zellableiter einer Batteriezelle (stoffschlüssig) zu verbinden. Wie die Anmelderin herausgefunden hat, eignen sich in diesem Zusammenhang die vorstehend angegebenen Abmessungen in besonderer Weise.

Eine erste Weiterbildung des erfindungsgemäßen Batteriezellen-Verbindungsmoduls sieht vor, dass dieses eine erste Anzahl von mehr als zwei Aufnahmen und eine zweite Anzahl von mehr als einem Fluidleitungsabschnitt aufweist. Jeder Fluidleitungsabschnitt verbindet immer mindestens zwei Aufnahmen fluidleidend miteinander.

Während im Rahmen der vorliegenden Erfindung die vorstehend beschriebenen Batteriezellen-Verbindungselemente neben ihrer Fluidleitungsfunktion auch für die elektrisch leitende Verbindung zweier Batteriezellen-Zellableiter sorgen können, dient das erfindungsgemäße Batteriezellen-Verbindungsmodul mit seinem Fluidleitungsabschnitt dazu, zwei Batteriezellen-Verbindungselemente fluidleitend miteinander zu verbinden, wobei aufgrund der Ausgestaltung zumindest des Fluidleitungsabschnitts in einem elektrisch nicht leitenden Werkstoff zugleich sichergestellt ist, dass Batteriezellen-Zellableiter nicht unbeabsichtigt elektrisch leitend miteinander verbunden werden, was zu einem Kurzschluss führen könnte. Auf diese Weise ist es möglich, die elektrische Kontaktierung der Batteriezellen von deren Temperierung zu trennen.

In der Regel werden Batteriezellen so benachbart angeordnet, dass bei zwei unmittelbar benachbarten Batteriezellen die Anordnung der elektrischen Pole jeweils vertauscht ist. Beispielsweise befindet sich auf diese Weise ein Pluspol einer ersten Batteriezelle neben dem Minuspol einer anderen Batteriezelle und umgekehrt. Mithilfe eines erfindungsgemäßen Batteriezellen-Verbindungselements können zwei derart benachbarte Anschlüsse unterschiedlicher Polung elektrisch leitend miteinander verbunden werden, um auf diese Weise mehrere Batteriezellen in Reihe schalten zu können. Durch das Zusammenwirken eines erfindungsgemäßen Batteriezellen-Verbindungselements mit einem erfindungsgemäßen Batteriezellen-Verbindungsmodul ist es nun möglich, die durch das Batteriezellen-Verbindungselement gewährleistete Fluidleitungsfunktion über das Batteriezellen-Verbindungsmodul und dessen Fluidleitungsabschnitt bei elektrischer Trennung zu einem weiteren, unmittelbar benachbarten Zellableiter weiterzuführen. Auf diese Weise lässt sich die vorstehend beschriebene Reihenschaltung der Batteriezellen erreichen, ohne dass es zu einem elektrischen Kurzschluss käme.

Wenn das Batteriezellen-Verbindungselement mit offenen Enden ausgestattet ist, kann zur Fluidleitung von Verbindungselement zu Verbindungselement ein elektrisch nichtleitendes Leitungselement, vorzugsweise aus Kunststoff, in die Batteriezellen-Verbindungselemente eingesetzt (eingeführt oder eingeschoben) sein/werden. Auch hierdurch ist es möglich, die durch das Batteriezellen-Verbindungselement gewährleistete Fluidleitungsfunktion über das Leitungselement bei elektrischer Trennung zu einem weiteren, unmittelbar benachbarten Zellableiter weiterzuführen. Auf diese Weise lässt sich ebenfalls - im Zuge eines alternativen Verfahrens - die vorstehend beschriebene Reihenschaltung der Batteriezellen nebst Temperierung erreichen, ohne dass es zu einem elektrischen Kurzschluss käme. Das Leitungselement kann mehrere hintereinander geschaltete Verbindungselemente durchsetzen und fluidtechnisch verbinden.

Wenn das Batteriezellen-Verbindungselement Durchbrüche der genannten Art aufweist, kann das Leitungselement korrespondierende Durchbrüche aufweisen.

Die im Montagezustand fluchtenden Durchbrüche von Verbindungselement und Leitungselement können dann mit jeweils einem Stopfen oder Verschlussteil gemeinsam fluiddicht verschlossen werden.

Batteriezellen-Verbindungselement und Leitungselement können stoffschlüssig miteinander verbunden sein. Zu diesem Zweck kann insbesondere an dem Verbindungselement wenigstens eine Klebewelle oder dgl. (also eine definierte Struktur zur Aufnahme von Klebstoff als Verbindungs- und Dichtmittel) vorgesehen sein, die bevorzugt vor dem Einbringen des Leitungselements oder danach über eine Öffnung von außen mit Klebstoff gefüllt wird. Alternativ oder zusätzlich kann an dem Leitungselement wenigstens eine Klebenut oder Kleberinne vorgesehen sein, die im Wesentlichen denselben Zweck erfüllt.

Das Leitungselement kann nach seinem Einbringen in ein Batteriezellen-Verbindungselement oder mehrere Batteriezellen-Verbindungselemente in seinem Querschnitt vergrößert werden ("aufgeblasen" oder anderweitig nach außen umgeformt), um das/die Batteriezellen-Verbindungselement/e kraft- bzw. formschlüssig auszukleiden.

Die vorstehend bereits erwähnte erste Weiterbildung des erfindungsgemäßen Batteriezellen-Verbindungsmoduls sieht vor, dass auch eine größere Anzahl von Batteriezellen zu einer entsprechend großen Batteriezellen-Anordnung verbunden werden kann.

Wieder eine andere Weiterbildung des erfindungsgemäßen Batteriezellen-Verbindungsmoduls sieht vor, dass die Fluidleitungsabschnitte und/oder die Aufnahmen in oder parallel zu jeweils einer gemeinsamen Ebene verlaufen und/oder über den Umfang eines Rechtecks verteilt angeordnet sind. Auf diese Weise ergibt sich eine Anordnung aus den erfindungsgemäßen Batteriezellen-Verbindungselementen und dem erfindungsgemäßen Batteriezellen-Verbindungsmodul, die sich in besonders einfacher Weise für die spätere Verwendung mit einer Anordnung von Batteriezellen eignet, um diese in der weiter oben genannten Art und Weise miteinander zu verbinden.

Noch eine andere Weiterbildung des erfindungsgemäßen Batteriezellen-Verbindungsmoduls sieht vor, dass ein erster Fluidleitungsabschnitt eine Zuleitung für ein Temperierfluid zu dem ersten Fluidleitungsabschnitt und ein zweiter Fluidleitungsabschnitt eine Ausleitung für ein Temperierfluid aus dem zweiten Fluidleitungsabschnitt aufweist. Auf diese Weise lässt sich das Batteriezellen-Verbindungsmodul über die Zuleitung mit einem externen Temperier- bzw. Kühlkreislauf verbinden bzw. an einen solchen Kreislauf anschließen. Über die genannte Ausleitung gelangt das Temperierfluid dann wieder zurück in diesen externen Kreislauf.

Noch eine andere Weiterbildung des erfindungsgemäßen Batteriezellen-Verbindungsmoduls sieht vor, dass der Fluidleitungsabschnitt oder die Fluidleitungsabschnitte an einer ersten Seite des Batteriezellen-Verbindungsmoduls offen sind und bei dem die Aufnahmen an einer der ersten Seite abgewandten zweiten Seite des Batteriezellen-Verbindungsmoduls angeordnet sind. Bei einer solchen Ausgestaltung ist sichergestellt, dass über die einseitig offenen Fluidleitungsabschnitte auch bei Batteriezellen-Verbindungselementen, die bereits in den entsprechenden Aufnahmen des Batteriezellen-Verbindungsmoduls aufgenommen sind, weiterhin die Durchbrüche in der weiter oben beschriebenen Art und Weise von außen zugänglich sind, um die Batteriezellen-Verbindungselemente mit den Zellableitern (stoffschlüssig) zu verbinden. Mit anderen Worten: Die Batteriezellen-Verbindungselemente können zunächst in das Batteriezellen-Verbindungsmodul eingelegt werden, und anschließend erfolgt dann die Verbindung der Batteriezellen-Verbindungselemente mit den Zellableitern. Auf diese Weise ist die Handhabung insbesondere der Batteriezellen-Verbindungselemente stark vereinfacht.

Dies gilt analog auch die die alternative Ausgestaltung der Batteriezellen-Verbindungselemente, bei denen jedoch keine Durchbrüche vorgesehen sind, sodass auch die Zugänglichkeit von außen einer weniger wichtige Rolle spielt, solange insbesondere die oben beschriebene Möglichkeit der Verbindung (Kehlnahtschweißen) erhalten bleibt. Der Fluidleitungsabschnitt kann hier einfach ein weiterer (Rohr-)Leitungsabschnitt sein, der immer zwischen zwei offenen Enden verschiedener Batteriezellen-Verbindungselemente angeordnet (zwischengeschaltet) ist.

Um dennoch die bereits angesprochene Fluidleitung des Temperierfluids über die Batteriezellen-Verbindungselemente und das Batteriezellen-Verbindungsmodul sicherzustellen zu können, sieht eine äußert bevorzugte andere Weiterbildung des Batteriezellen-Verbindungsmoduls vor, dass dieses zusätzlich wenigstens ein Deckelteil aufweist, welches Deckelteil den wenigstens einen Fluidleitungsabschnitt, vorzugsweise mehrere Fluidleitungsabschnitte, höchst vorzugsweise alle Fluidleitungsabschnitte, nach außen fluiddicht abschließt. Vorteilhafterweise können zu diesem Zweck an dem Deckelteil oder in einem Umfangsbereich der Fluidleitungsabschnitte entsprechende Dichtelemente angeordnet bzw. angeformt sein. Gleiches gilt auch für den Bereich der Fluidzuleitung und der Fluidausleitung des Batteriezellen-Verbindungsmoduls, an welchen Stellen dieses mit einem Batteriezellen-Verbindungselement im Bereich von einem der betreffenden Durchbrüche zusammenwirkt. Auf diese Weise ist in allen Fällen eine Fluiddichtheit sichergestellt. Bei der alternativen Ausgestaltung der Batteriezellen-Verbindungselemente ist ein solches Deckelteil grundsätzlich entbehrlich.

Eine wieder andere Weiterbildung des erfindungsgemäßen Batteriezellen-Verbindungsmoduls sieht vor, dass dies noch eine weitere Aufnahme zum Aufnehmen einer Elektronikplatine (PCB - Printed Circuit Board) aufweist. Vorzugsweise ist diese weitere Aufnahme von den Aufnahmen für die Batteriezellen-Verbindungselemente und von den Fluidleitungsabschnitten umgeben. Auf diese Weise lässt sich der bei Batteriezellen-Anordnungen regelmäßig vorhandene Bauraum zentral oberhalb der Batteriezellen in vorteilhafter Weise für die Anordnung insbesondere einer Elektronikplatine nutzen, weil eine (elektrisch leitende und/oder fluidleitende) Verbindung der Zellableiter regelmäßig nur in den Randbereichen der Batteriezellen-Anordnung erforderlich ist.

Außerdem kann in Weiterbildung des erfindungsgemäßen Batteriezellen-Verbindungsmoduls noch vorgesehen sein, dass von der weiteren Aufnahme galvanische Verbindungen ausgehen, die sich bis zu den Aufnahmen für die Batteriezellen-Verbindungselemente erstrecken. Auf diese Weise ist es einfach möglich, die in der weiteren Aufnahme aufgenommene Elektroplatine elektrisch leitend mit den Batteriezellen-Verbindungselementen zu verbinden.

Dies kann beispielsweise dann erforderlich bzw. vorteilhaft sein, wenn die Elektronikplatine zur Ausbildung eines Batterie-Managementsystems (BMS) vorgesehen ist. In diesem Zusammenhang kann es beispielsweise erforderlich sein, ein Potenzial der einzelnen Batteriezellen zu ermitteln und/oder anzugleichen. Zu diesem Zweck können die genannten galvanischen Verbindungen verwendet werden, weil sich eine aufwendige, zusätzliche Verdrahtung der Batteriezellen-Anordnung mit dem BMS (der Elektroplatine) erübrigt.

Eine weitere Ausgestaltung der Verbindung zur Elektroplatine kann durch das Aufdrucken (beispielsweise mittels Siebdruck oder Tampondruck) von Leiterbahnen auf das Batteriezellen-Verbindungsmodul realisiert werden. Es entfallen dann aufwändige galvanische Verbindungsstrukturen, und das Bauteil wird leichter und kostengünstiger. Die Kontaktierung kann über mechanisch vorgespannte Federelemente gewährleistet sein.

Eine erste Weiterbildung der erfindungsgemäßen Batteriezellen-Verbindungsanordnung sieht vor, dass die Batteriezellen-Verbindungselemente und die Fluidleitungsabschnitte gemeinsam einen geschlossenen Fluidkreislauf bilden. Gegebenenfalls kann dieser geschlossene Fluidkreislauf durch das weiter oben angesprochene Deckelteil nach außen abgeschlossen werden. Die Formulierung "geschlossener Fluidkreislauf" schließt das Vorhandensein der weiter oben angesprochenen Zuleitung und Ausleitung für das Temperierfluid ausdrücklich mit ein.

Eine wieder andere Weiterbildung der erfindungsgemäßen Batteriezellen-Verbindungsanordnung sieht vor, dass die Batteriezellen-Verbindungselemente, gegebenenfalls bei abgenommenem Deckelteil, von der ersten Seite über die Fluidzuleitung oder die Fluidausleitung und über die jeweiligen Durchbrüche von außen zugänglich sind. Auf diese Weise ist wiederum sichergestellt, dass der Einsatz einer erfindungsgemäßen Batteriezellen-Verbindungsanordnung entsprechender Weiterbildung ein nachträgliches (stoffschlüssiges) Verbinden der einzelnen Batteriezellen-Verbindungselemente von der genannten ersten Seite her mit den Zellableitern einer Batteriezellen-Anordnung ermöglicht. Dies erleichtert die Handhabung der genannten Elemente, worauf bereits hingewiesen wurde.

Noch eine andere Weiterbildung der erfindungsgemäßen Batteriezellen-Verbindungsanordnung sieht vor, dass in der genannten weiteren Aufnahme eine Elektronikplatine aufgenommen ist, welche Elektronikplatine vorzugsweise Elektronikbauteile zur Steuerung des Betriebs einer Batteriezellen-Anordnung aus mehreren Batteriezellen aufweist. Hierauf wurde weiter oben bereits hingewiesen.

Um insbesondere eine zeit- und kostenaufwendige nachträgliche Verdrahtung oder Verkabelung der Elektronikplatine zu vermeiden, sieht eine wieder andere Weiterbildung der erfindungsgemäßen Batteriezellen-Verbindungsanordnung vor, dass die Elektronikplatine und/oder wenigstens einige der darauf befindlichen Elektronikbauteile über die genannten galvanischen Verbindungen die Batteriezellen-Verbindungselemente elektrisch kontaktieren bzw. mit diesen in elektrisch leitfähiger Verbindung stehen.

Als besonders vorteilhaft für die praktische Verwendung hat sich erwiesen, wenn die Batteriezellen-Verbindungselemente formschlüssig und/oder kraftschlüssig an dem Batteriezellen-Verbindungsmodul im Bereich der Aufnahmen gehalten sind. Insbesondere kommen in diesem Bereich sogenannte Rast-, Klemm- oder Clipsverbindungen in Betracht, die sich insbesondere dann besonders einfach und kostengünstig ausbilden lassen, wenn das Batteriezellen-Verbindungsmodul als Spritzgussteil in einem Kunststoff ausgebildet ist. Die Erfindung ist jedoch keinesfalls auf eine derartige Ausgestaltung des Batteriezellen-Verbindungsmoduls beschränkt.

Etwaige Dichtelemente, auf die bereits hingewiesen wurde, können bei der Herstellung des Batteriezellen-Verbindungsmoduls direkt mit angeformt oder angegossen (2K-Spritzguss) werden. Auch die Verwendung separater Dichtelemente kommt in Betracht. Dies betrifft insbesondere die Übergänge von den Batteriezellen-Verbindungselementen zu dem Batteriezellen-Verbindungsmodul und von dem Batteriezellen-Verbindungsmodul zu dem Deckelteil. Auch an dem Deckelteil können entsprechende Dichtelemente angeordnet sein.

Bei einer ersten Weiterbildung der erfindungsgemäßen Batteriezellen-Anordnung kann vorgesehen sein, dass die Batteriezellen-Verbindungselemente stoffschlüssig mit den Zellableiter verbunden sind. Hierauf wurde bereits wiederholt hingewiesen. Eine solche Verbindung ist besonders sicher und dauerhaft.

Noch eine andere Weiterbildung der erfindungsgemäßen Batteriezellen-Anordnung sieht vor, dass die Batteriezellen-Verbindungselemente und der Fluidleitungsabschnitt oder die Fluidleitungsabschnitte mit einem Temperierfluid (Dielektrikum) gefüllt oder von einem solchen Temperierfluid durchströmt sind. Auf diese Weise lässt sich eine besonders effiziente Temperierung der Batteriezellen bzw. Zellableiter bewerkstelligen.

Schließlich sieht eine Weiterbildung des erfindungsgemäßen Verfahrens noch vor, dass im Schritt d) die Batteriezellen-Verbindungselemente durch die Fluidzuleitung oder die Fluidausleitung und über die jeweiligen Durchbrüche von außen mit den Zellableitern verbunden werden, bevorzugt verschweißt, und bei dem anschließend, vor Schritt e), das Deckelteil zum Verschließen der Batteriezellen-Verbindungsanordnung und der betreffenden Fluidströmungswege aufgesetzt wird.

Auf diese Weise gelingt es mithilfe der vorliegenden Erfindung, die Ableiterkühlung von Zellableitern bei einer Batteriezellen-Anordnung in ein Ableiterkühlungsmodul zu überführen bzw. zu einem solchen weiterzuentwickeln. Das genannte (Batteriezellen-Verbindungs-)Modul umfasst entsprechend der vorstehenden Beschreibung einen rahmenartigen Grundkörper, der vorzugsweise aus Kunststoffspritzguss gebildet ist. In diesen Grundkörper können die metallischen Elemente (die Batteriezellen-Verbindungselemente) zur elektrischen Verschaltung der Batteriezellen eingelegt und vorteilhafterweise über eine Clip- oder Schnappverbindung oder dgl. fixiert werden. Dadurch ergibt sich eine Montage-/Handhabungshilfe, wie vorstehend beschrieben, welche die vorteilhafterweise relativ dünnwandigen Verbindungselemente bei ihrer (elastischen) Anformung an die Zellableiter ideal abstützen kann. Der genannte Grundkörper aus einem elektrisch nichtleitenden Material (vorzugsweise Kunststoffspritzguss) sorgt zusätzlich für die Isolierung aller Komponenten mit einem voneinander abweichenden elektrischen Potenzial.

Es wurde bereits darauf hingewiesen, dass die (metallischen) Verbindungselemente direkt aus einem Halbzeug (Rohr) durch Umformung hergestellt werden können. Zur stirnseitigen Abdichtung können die jeweiligen Enden (Rohrenden) gequetscht und verschweißt oder verlötet werden. Insbesondere durch ein Verlöten können in einem Prozessschritt auch die Werkstoffeigenschaften beeinflusst werden.

Die erforderliche Fluidabdichtung (für das Temperierfluid) kann durch Einstecken der metallischen Verbindungselemente und eine Sicherung derselben an dem Verbindungsmodul durch einen elastischen Formschluss realisiert werden, insbesondere im Bereich der Durchbrüche.

Vorteilhafterweise sind die metallischen Verbindungselemente aus einem elektrisch und thermisch gut leitfähigen Werkstoff hergestellt, vorzugsweise einer Aluminiumlegierung oder Kupfer.

Eine Ausführungsvariante sieht vor, den genannten Grundkörper des Batteriezellen-Verbindungsmoduls in einem Mehrkomponenten-Spritzgussverfahren herzustellen und die zur Abdichtung gegenüber den Verbindungselementen erforderlichen Dichtelemente, auf die weiter oben bereits hingewiesen wurde, direkt mit anzuspritzen (anzuformen).

Darüber hinaus wird vorgeschlagen, im Rahmen einer anderen Weiterbildung der Erfindung die Verbindungselemente über den Batteriepolen (Zellableitern) auszuklinken, sodass eine Zugänglichkeit zur Schweißnahtverbindung der metallischen Verbindungselemente mit dem Zellableiter entsteht. Hierauf wurde weiter oben bereits wiederholt hingewiesen (Durchbrüche, Ausstanzungen). Weiterhin kann sich auf diese Weise der Vorteil ergeben, dass die Fluidkanäle für das Temperierfluid durch einen einzigen Montageschritt in z-Richtung hergestellt werden können. Die genannte z-Richtung bezeichnet hierbei eine (vertikale) Richtung quer zu einer die Zellableiter einer Batteriezellen-Anordnung enthaltenden Ebene. Die Erfindung ist jedoch keinesfalls auf eine derartige Geometrie festgelegt, wobei grundsätzlich die Möglichkeit besteht, Zu- und Abgänge für das Temperierfluid innerhalb oder parallel zu der genannten Ebene auszubilden.

Es besteht im Rahmen einer anderen Weiterbildung der Erfindung die Möglichkeit, das Deckelteil zum Verschließen der fluidführenden Kanäle über Filmscharniere an dem restlichen Verbindungsmodul anzubringen, sodass der Handhabungsaufwand reduziert ist.

In Weiterbildung des weiter oben bereits beschriebenen Verfahrens liegt es im Rahmen der vorliegenden Erfindung, zunächst das Verbindungsmodul in einem (2K-)Spritzgussverfahren herzustellen und dann die metallischen Verbindungselemente herzustellen und in das Verbindungsmodul einzuklippen. Danach lassen sich die metallischen Verbindungselemente elastisch an die Zellableiter einer Batteriezellen-Anordnung anformen, indem sie sich im/am Grundkörper (des Verbindungsmoduls) abzustützen, während dieses an der Batteriezellen-Anordnung befestigt wird, beispielsweise festgeklippt. Danach werden die elektrischen Verbindungen der metallischen Verbindungselemente zu den Zellableitern in einem Schweißprozess hergestellt, vorzugsweise in -z-Richtung. Anschließend werden die Fluidkanäle durch Aufsetzen des Deckelteils geschlossen. Zum Abschluss dieser Verfahrensschritte kann eine Dichtigkeitsprüfung durchgeführt werden.

Abweichend von der vorstehenden Beschreibung ist eine Variante möglich, bei der ein (metallisches) Verbindungselement einen sog. Modulableiter bildet. Mit anderen Worten: Wenigstens eines der metallischen Verbindungselemente kann (seitlich) von der Batteriezellen-Anordnung abragen und auf diese Weise den genannten Modulableiter, das heißt einen elektrischen Anschluss für die gesamte Batteriezellen-Anordnung bilden.

Es wurde bereits darauf hingewiesen, dass bestimmte galvanische Verbindungen vorgesehen sein können, um beispielsweise ein BMS in den Modul-Grundkörper des Verbindungsmoduls zu integrieren. In Weiterbildung dieser Idee sind Ausgestaltungen möglich, bei denen Temperaturmesselemente oder andere Arten von Sensoren direkt in den Grundkörper des Verbindungsmoduls integriert sind.

Es wurde bereits darauf hingewiesen, dass der Modul-Grundkörper vorzugsweise in einem Kunststoff hergestellt wird. Speziell kann in Weiterbildung dieser Idee vorgeschlagen, den Grundkörper des Verbindungsmoduls aus PP30GF oder PA herzustellen.

Es kann eine mehrteilige Variante vorgesehen sein, bei der der Grundkörper des Verbindungsmoduls die metallischen Verbindungselemente fixiert und ein zusätzlicher Fluidleitungskörper, der erst nach Montage des Grundkörpers an der Batteriezellen-Anordnung angebracht wird, zum Verschließen der Fluidkanäle Verwendung findet. Grundsätzlich entspricht dies der bereits weiter oben angesprochenen Verwendung eines Deckelteils.

Bei Weiterbildung dieser Idee kann vorgesehen sein, dass der oder die Fluidleitungskörper (Deckelteil/e) mit einer Dichtung oder einem angespritzten Dichtelement mechanisch vorgespannt abgedichtet werden oder dass die Abdichtung über eine Klebeverbindung erfolgt, die wiederum über eine Clipverbindung oder dergleichen bis zur vollständigen Vernetzung des Klebstoffs fixiert werden kann.

In dem Batteriezellen-Verbindungsmodul können darüber hinaus Kanäle zur Batteriezellen-Entgasung vorgesehen sein. In diesem Zusammenhang ist es möglich, die genannten Kanäle im Kunststoff abzubilden oder als zusätzliche (metallische) Einleger auszubilden. Eine solche Ausgestaltung kann es in vorteilhafter Weise ermöglichen, dass ein Fluidzugang oder -abgang sowie die elektrische Kontaktierung geometrisch fast vollständig frei an dem Verbindungsmodul platzierbar ist bzw. sind.

Die vorstehend beschriebene Erfindung zeichnet sich durch ihre Leichtbaueigenschaften, die weitgehende Funktionsintegration, die einfache Montier- und Handhabbarkeit, ihren modularen Aufbau, die erreichbare elektrische Isolierung und die somit geschaffene Schnittstelle zur Automobilindustrie aus.

Weitere Eigenschaften und Vorteile der Erfindung ergeben sich aus der nachfolgenden Beschreibung von Ausführungsbeispielen anhand der Zeichnungen.
- Figur 1: zeigt eine isometrische Ansicht einer Batteriezellen-Anordnung mit daran angeordneten Batteriezellen-Verbindungselementen;
- Figur 2: zeigt eine isometrische Detailansicht eines Batteriezellen-Verbindungselements;
- Figur 3a: zeigt eine erste Schnittansicht des Batteriezellen-Verbindungselements aus Figur 2;
- Figur 3b: zeigt eine zweite Schnittansicht des Batteriezellen-Verbindungselements aus Figur 2;
- Figur 4: zeigt die Batteriezellen-Anordnung aus Figur 1 mit einem erfindungsgemäßen Batteriezellen-Verbindungsmodul in isometrischer Ansicht ohne Deckelteil;
- Figur 5: zeigt die Batteriezellen-Anordnung aus Figur 4 mit aufgesetztem Deckelteil;
- Figur 6: zeigt einen ersten Schnitt durch die Batteriezellen-Anordnung gemäß Figur 5 im Detail;
- Figur 7: zeigt einen zweiten Schnitt durch die Batteriezellen-Anordnung gemäß Figur 5 im Detail;
- Figur 8: zeigt eine alternative Ausgestaltung von Batteriezellen-Verbindungselement und Batteriezellen-Verbindungsmodul;
- Figur 9: zeigt eine alternative Ausgestaltung einer Batteriezellen-Anordnung in perspektivischer Gesamtdarstellung;
- Figur 10: zeigt einen teilweisen Längsschnitt durch die Ausgestaltung gemäß Figur 9;
- Figur 11: zeigt einen teilweisen Querschnitt durch die Ausgestaltung gemäß Figur 9; und
- Figur 12: zeigt einen teilweisen Querschnitt durch eine der Ausgestaltung gemäß Figur 9 alternative Ausgestaltung.
In der nachfolgenden detaillierten Figurenbeschreibung bezeichnen gleiche Bezugszeichen gleiche oder zumindest gleichwirkende Elemente. Aus Gründen der Übersichtlichkeit sind nicht in allen Figuren sämtliche darin vorkommenden Elemente explizit bezeichnet. Zum Teil wird deshalb bei der Beschreibung dieser Figuren auf andere Figuren Bezug genommen.

Figur 1 zeigt in isometrischer Gesamtdarstellung eine Anordnung von Batteriezellen (Batteriezellen-Anordnung), die in ihrer Gesamtheit mit dem Bezugszeichen 1 versehen ist. Bezugszeichen 2 bezeichnet die einzelnen Batteriezellen, die als sog. prismatische Zellen ausgebildet sind, ohne dass die Erfindung jedoch hierauf beschränkt wäre. Jede der Batteriezellen 2 ist in einem etwa quaderförmigen Gehäuse angeordnet und weist an ihrer Oberseite zwei sogenannte Zellableiter 3 auf, von denen in Figur 1 nur zwei explizit bezeichnet sind. Jede Batteriezelle 2 weist einen Zellableiter mit einer ersten elektrischen Polung (beispielsweise Pluspol) und einen zweiten Zellableiter mit einer zweiten elektrischen Polung (beispielsweise Minuspol) auf. In Figur 1 sind einige der Batteriezellen 2 bzw. Zellableiter 3 explizit mit entsprechenden Symbolen (+ bzw. -) gekennzeichnet.

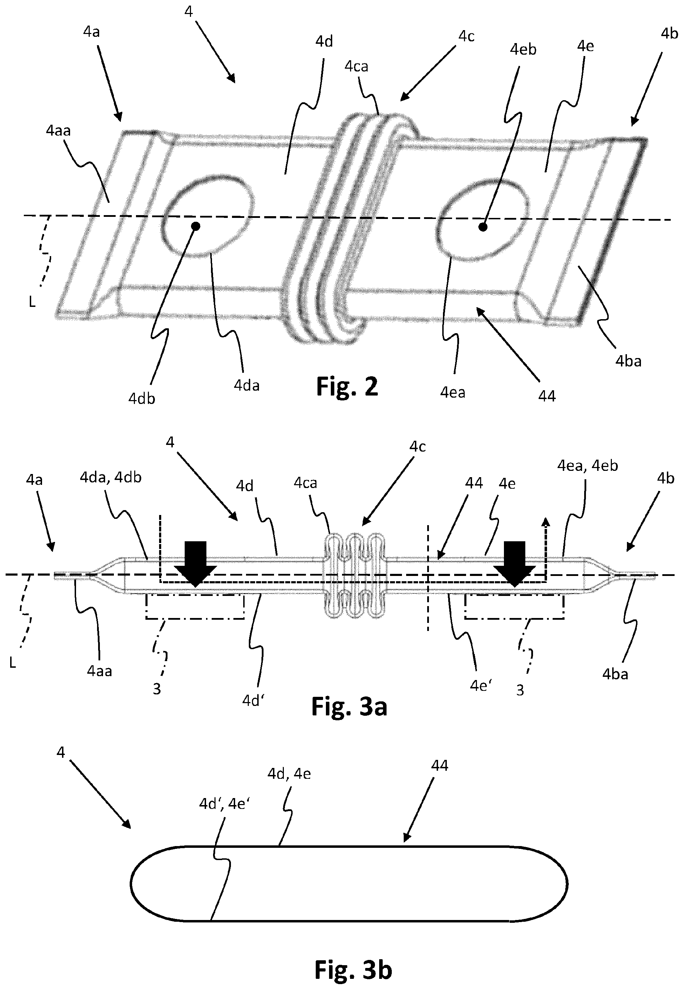

Die Batteriezellen 2 sind elektrisch nach Art einer Reihenschaltung angeordnet, sodass sich die Spannungen der einzelnen Batteriezellen 2 zu einer größeren Gesamtspannung addieren. Zu diesem Zweck sind die Batteriezellen 2 abwechselnd mit umgekehrter elektrischer Polung angeordnet, wie dargestellt. Mit anderen Worten: Ein Zellableiter 3 mit erster Polung einer gegebenen Batteriezelle 2 ist unmittelbar benachbart zu dem Zellableiter 3 mit zweiter Polung einer benachbarten Batteriezelle 2 angeordnet, wie dargestellt. Aus Gründen der Übersichtlichkeit sind in Figur 1 nicht alle Zellableiter 3 mit einer entsprechenden elektrischen Polung bezeichnet. Die gestrichelte mäanderförmige Linie in Figur 1 symbolisiert einen Stromflusspfad bzw. Stromfluss S durch die Batteriezellen-Anordnung 1. Zu diesem Zweck sind die Zellableiter 3 benachbarter Batteriezellen 2 mit unterschiedlicher Polung mit jeweils einem Batteriezellen-Verbindungselement 4 elektrisch leitend verbunden. Auf die genaue Ausgestaltung der Batteriezellen-Verbindungselemente 4 wird nachfolgend insbesondere anhand der Figuren 2, 3a und 3b noch genauer eingegangen.

Zusätzlich zu den bereits angesprochenen Batteriezellen-Verbindungselementen 4, die jeweils unterschiedliche Pole bzw. elektrisch unterschiedlich gepolte Zellableiter 3 benachbarter Batteriezellen 2 elektrisch verbinden, existieren bei der Ausgestaltung gemäß Figur 1 noch ähnlich ausgestaltete Batteriezellen-Verbindungselemente 4', die jeweils nur mit einem Batteriezellen-Zellableiter elektrisch leitend verbunden sind. Gemäß der Darstellung in Figur 1 befinden sich diese Batteriezellen-Verbindungselemente 4' am Anfang und am Ende des Stromflusspfades S und können so vorzugsweise als sog. Modul-Ableiter zum elektrischen Anschließen der Batteriezellen-Anordnung 1 an einen externen Stromkreis verwendet werden. Von den zuvor angesprochenen Batteriezellen-Verbindungselementen 4 unterscheiden sich die Batteriezellen-Verbindungselemente 4' im Wesentlichen nur durch die fehlenden Balgwellen im mittleren Bereich der Batteriezellen-Verbindungselemente. Hierauf wird weiter unten ebenfalls noch genauer eingegangen.

Im Rahmen der vorliegenden Erfindung dienen die Batteriezellen-Verbindungselemente 4 nicht nur zum elektrischen Verbinden benachbarter Batteriezellen 2, sondern sie erfüllen auch noch eine Fluidleitungsfunktion für ein Temperierfluid zum Temperieren der Batteriezellen 2. Auf diesen Aspekt wird ebenfalls weiter unten noch eingegangen.

Zum Gegenstand der Figur 1 ist noch anzumerken, dass benachbarte Batteriezellen-Verbindungselemente 4, 4' sich nicht berühren, sodass zwischen diesen kein elektrisch leitender Kontakt ausgebildet ist. Ein solcher Kontakt könnte ansonsten zu einem Kurzschließen der Batteriezellen-Anordnung 1 und zu einer Zerstörung der Batteriezellen 2 führen.

In Figur 2 ist ein einzelnes Batteriezellen-Verbindungselement 4 gemäß Figur 1 genauer dargestellt. Es umfasst einen als Fluidleitungselement (Rohrabschnitt) ausgebildeten Grundkörper 44 aus einem elektrisch leitenden Metall mit einer Längsachse L, welcher Grundkörper 44 an seinen beiden Enden 4a, 4b fluiddicht verschlossen ist. Der Grundkörper 44 weist eine umfänglich im Wesentlichen geschlossene Mantelwandung auf, in welcher Mantelwandung auf einer selben Seite des Grundkörpers wenigstens zwei Durchbrüche 4da, 4ea, vorzugsweise Ausstanzungen, angeordnet sind. Die Durchbrüche 4da, 4ea sind in Richtung der Längsachse L versetzt nebeneinander angeordnet.

Im Speziellen ist das Batteriezellen-Verbindungselement 4 im Wesentlichen als flaches Rohrleitungselement mit einem in weiten Bereichen flachen, ovalen Querschnitt, wie sich insbesondere aus Figur 3b ergibt, ausgebildet. An seinen stirnseitigen Enden 4a, 4b ist das Batteriezellen-Verbindungselement 4 fluiddicht verschlossen, beispielsweise gefalzt oder stoffschlüssig verbunden, beispielsweise verlötet. Diese Stirnseiten des Batteriezellen-Verbindungselements 4 sind in Figur 2 mit Bezugszeichen 4aa und 4ba bezeichnet. In seinem mittleren Bereich zwischen den Enden 4a, 4b weist das Batteriezellen-Verbindungselement 4 einen gewellten Abschnitt 4c auf, in dem eine Anzahl von Ringwellen oder Balgwellen 4ca ausgebildet sind. In den Bereichen zwischen jeweils einem seiner Enden 4a, 4b und dem gewellten Bereich 4c ist das Batteriezellen-Verbindungselement 4 im Wesentlichen eben ausgebildet und weist parallele Seitenflächen (Seitenwände) bzw. Mantelflächenabschnitte (Mantelwandungsabschnitte) auf, von denen in Figur 2 nur zwei mit Bezugszeichen 4d und 4e bezeichnet sind. In jeder dieser ebenen Mantelflächenabschnitte 4d, 4e ist jeweils ein Durchbruch 4da, 4ea ausgebildet, der eine Öffnung 4db, 4eb definiert, die mit einem Innenraum des Batteriezellen-Verbindungselements 4 kommuniziert. Insbesondere ist durch jeden der Durchbrüche 4da, 4ea der in Figur 2 jeweils nicht näher bezeichnete Mantelflächenabschnitt auf der anderen Seite des Batteriezellen-Verbindungselements 4 erreichbar bzw. von außen zugänglich. Die Balgwellen 4ca bzw. der gewellte Bereich 4c sorgen für eine gewisse elastische Verformbarkeit des Batteriezellen-Verbindungselements in Richtung seiner Längsachse L, wie dargestellt. Aus diesem Grund werden die Batteriezellen-Verbindungselemente 4 der in Figur 2 gezeigten Art gemäß Figur 1 zum Verbinden verschiedener Batteriezellen 2 (vgl. Figur 1) verwendet. Figur 3a zeigt einen Schnitt durch das Batteriezellen-Verbindungselement 4 der Figur 2 entlang der Längsachse L. Figur 3b zeigt einen Schnitt quer dazu, beispielsweise gemäß der gestrichelten vertikalen Linie in Figur 3a.

Entsprechend ist bei dem gezeigten Batteriezellen-Verbindungselement 4 vorgesehen, dass der Grundkörper 44 zumindest an seiner den Durchbrüchen 4da, 4ea gegenüberliegenden Seite abschnittweise (bei Bezugszeichen 4d', 4e'; vgl. Figur 3a, 3b) im Wesentlichen eben ausgebildet ist, so dass vorzugsweise ebene Abschnitte des Grundkörpers 44 in einer Richtung quer zu der Längsachse L mit den Durchbrüchen 4da, 4ea bzw. den Öffnungen 4db, 4eb fluchten. Speziell weist der Grundkörper 44 demnach wenigstens zwei abschnittweise im Wesentlichen ebene, parallel zueinander angeordnete Seitenwände 4d, 4d' bzw. 4e, 4e' auf, in jeweils einer von denen der betreffende Durchbruch 4da, 4ea angeordnet ist.

In Figur 3a symbolisieren die schwarzen Blockpfeile die bereits angesprochene Zugänglichkeit der unteren Seitenflächen oder Seitenwände 4d' und 4e' über die Durchbrüche 4da, 4ea bzw. die Öffnungen 4db, 4eb. Auf diese Weise lässt sich das Batteriezellen-Verbindungselement 4 mittels eines geeigneten Werkzeugs (nicht gezeigt) mit den darunter liegenden Zellableitern 3 (in Figur 3a strichpunktiert dargestellt) verbinden, beispielsweise stoffschlüssig. Die durch die Blockpfeile 3a symbolisierte Richtung entspricht in der Regel der -z-Richtung. Der gestrichelte Pfeil in Figur 3a symbolisiert einen möglichen Strömungspfad für das bereits erwähnte Temperierfluid durch das Batteriezellen-Verbindungselement 4. Ohne Beschränkung kann das Temperierfluid durch die Öffnung 4db in das Batteriezellen-Verbindungselement einströmen und dieses über die Öffnung 4eb wieder verlassen, wie dargestellt. Auf diese Weise kann das Batteriezellen-Verbindungselement 4 sowohl zum elektrisch leitenden Verbinden von Zellableitern 3 als auch zu deren Temperierung verwendet werden, worauf weiter unten noch genauer eingegangen wird. Bevorzugt ist das Batteriezellen-Verbindungselement 4 zu diesem Zweck aus einem metallisch, elektrisch (und thermisch) gut leitenden Werkstoff hergestellt, insbesondere Kupfer oder einer Aluminiumlegierung (ohne Beschränkung).

Die Figur 3b, auf die bereits hingewiesen wurde, zeigt einen Querschnitt durch das Batteriezellen-Verbindungselement 4 etwa gemäß der vertikalen, gestrichelten Linie in Figur 3a. Entsprechend weist das Batteriezellen-Verbindungselement in diesem Bereich (und entsprechend auch auf der anderen Seite des gewellten Bereichs 4c, vgl. Figur 3a) einen flachen, ovalen Querschnitt auf, sodass die bereits angesprochenen Seitenflächen bzw. Mantelwandungsabschnitte 4d, 4e bzw. 4d', 4e' in den genannten Bereichen eben ausgebildet sind. Dies vereinfacht insbesondere die Anbindung des Batteriezellen-Verbindungselements 4 an die Zellableiter 3 (vgl. Figur 3a).

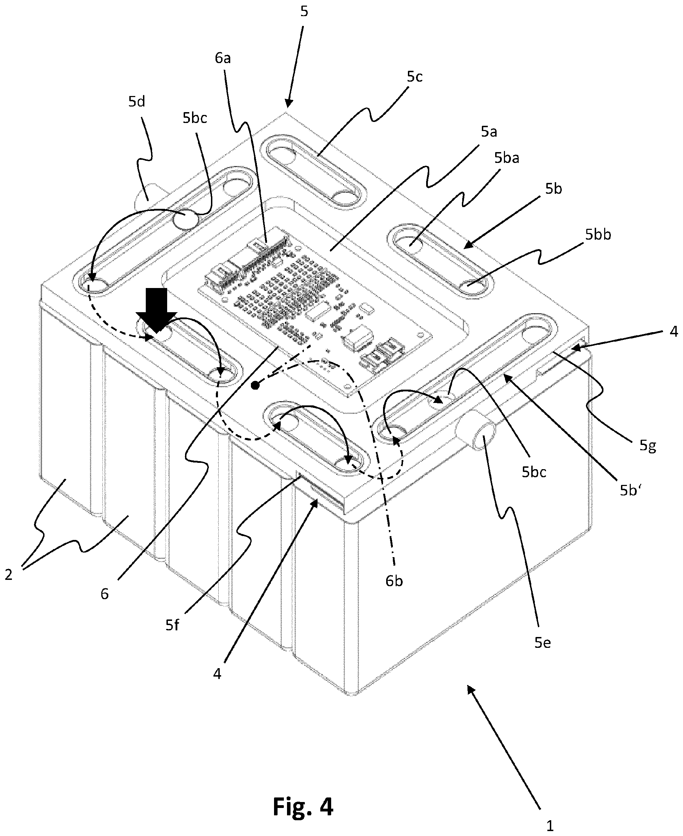

Figur 4 zeigt eine weitere isometrische Gesamtansicht einer Batteriezellen-Anordnung 1 mit mehreren Batteriezellen 2 und mit den Zellableitern der Batteriezellen 2 verbundenen Batteriezellen-Verbindungselementen 4, 4' gemäß Figur 1 bzw. gemäß den Figuren 2 bis 3b. Allerdings sind bei der Darstellung in Figur 4 die genannten Zellableiter und Batteriezellen-Verbindungselemente 4, 4' nur zum Teil erkennbar, weil oben auf die Batteriezellen-Anordnung 1 und entsprechend auch auf die genannten Batteriezellen-Verbindungselemente 4, 4' ein Batteriezellen-Verbindungsmodul 5 aus Kunststoff-Spritzguss aufgesetzt wurde.

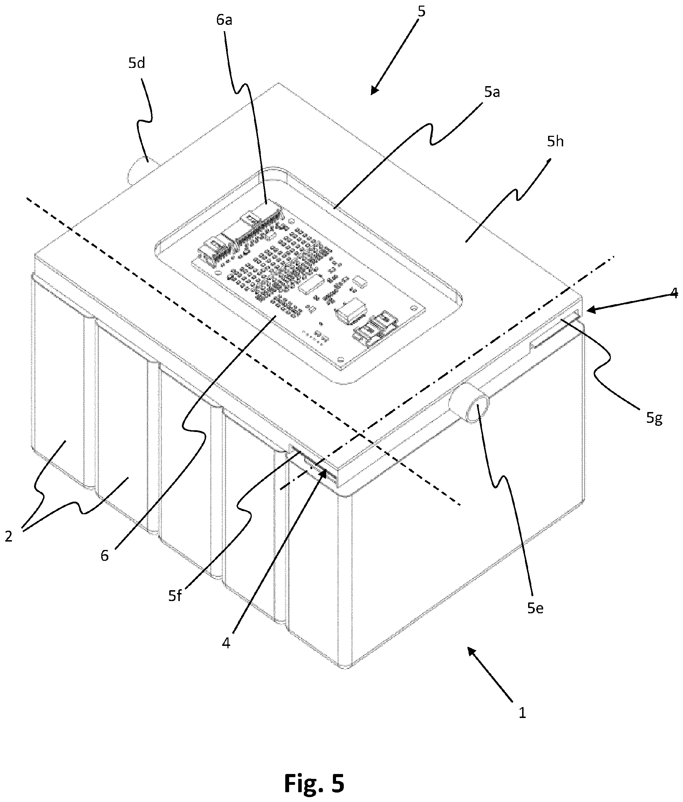

Im einleitenden Teil der Beschreibung wurde bereits darauf hingewiesen, dass vorteilhafterweise - abweichend von der bisherigen Figurenbeschreibung - zunächst die Batteriezellen-Verbindungselemente 4, 4' (vgl. Figur 1) in bzw. an dem Batteriezellen-Verbindungsmodul 5 gemäß Figur 5 angeordnet werden, wobei sie vorteilhafterweise in bzw. an dem Batteriezellen-Verbindungsmodul 5 kraft- und/oder formschlüssig gehalten sind, beispielsweise durch Clipsverbindungen oder dergleichen. Anschließend wird dann das Batteriezellen-Verbindungsmodul 5 mit den Batteriezellen-Verbindungselementen 4, 4' auf die Batteriezellen-Verbindungsanordnung 1 bzw. die Batteriezellen 2 aufgesetzt, wie in Figur 4 gezeigt. An den Batteriezellen 2 können geeignete Befestigungsstrukturen (nicht gezeigt) vorhanden sein, die mit entsprechenden, komplementären Befestigungsstrukturen (ebenfalls nicht gezeigt) an dem Batteriezellen-Verbindungsmodul 5 zusammenwirken, um das Batteriezellen-Verbindungsmodul 5 an den Batteriezellen 2 zu befestigen. Die Batteriezellen 2 können auch in einem (Modul-)Gehäuse (nicht gezeigt) verbaut und mechanisch vorgespannt sein. Die Befestigungsstrukturen zur Montage des Batteriezellen-Verbindungsmoduls 5 sind dann vorzugsweise an diesem Gehäuse vorgesehen.

Es sei nun auf bestimmte Einzelheiten des Batteriezellen-Verbindungsmoduls 5 näher eingegangen:
Das Batteriezellen-Verbindungsmodul 5 ist nach Art eines flachen Rahmens (als Grundkörper) aus Kunststoff-Spritzguss ausgebildet, der eine zentrale Ausnehmung 5a aufweist. In dieser zentralen Ausnehmung 5a ist ein PCB (Elektronikplatine) 6 angeordnet, das/die mit einer Reihe von elektronischen Bauteilen 6a bestückt ist, von denen aus Gründen der Übersichtlichkeit in Figur 4 nur eines näher bezeichnet ist. Das PCB 6 ist an sich nicht Bestandteil des Batteriezellen-Verbindungsmoduls 5. Um die genannte zentrale Ausnehmung 5a herum weist das Batteriezellen-Verbindungsmodul 5 eine Anzahl von Fluidleitungsabschnitten 5b, 5b' auf, die ebenfalls als Ausnehmungen in dem Batteriezellen-Verbindungsmodul 5 ausgebildet sind. Auf die Unterschiede zwischen den verschiedenen Fluidleitungsabschnitten 5b, 5b' wird weiter unten noch genauer eingegangen.

Jeder der Fluidleitungsabschnitte 5b, 5b' weist zwei endständige Durchbrüche 5ba, 5bb auf, von denen einer als Fluidzuleitung und der andere als Fluidausleitung fungiert. Auf seiner in Figur 4 nicht erkennbaren Unterseite weist das Batteriezellen-Verbindungsmodul 5 Aufnahmen zum formschlüssigen und/oder kraftschlüssigen Aufnehmen von Batteriezellen-Verbindungselementen 4, 4' (vgl. Figuren 1 bis 3b) auf, wobei diese Aufnahmen so ausgebildet bzw. angeordnet und auf die Abmessungen der Batteriezellen-Verbindungselemente 4, 4' abgestimmt sind, dass die Durchbrüche 5ba, 5bb des Batteriezellen-Verbindungsmoduls 5 jeweils mit einem der Durchbrüche 4db, 4ed (vgl. Figuren 2 bis 3b) der Batteriezellen-Verbindungselemente 4 fluidleitend korrespondieren. Mit anderen Worten: Ein Abstand benachbarter Durchbrüche 5ba, 5bb zweier verschiedener Fluidleitungsabschnitte 5b, 5b' entspricht gerade einem Abstand der beiden Durchbrüche 4db, 4eb eines Batteriezellen-Verbindungselements 4 (vgl. Figuren 2 bis 3b). Auch die Abmessungen der Durchbrüche 5ba, 5bb bzw. der Durchbrüche 4da, 4ea (der Öffnungen 4db, 4eb) sind aufeinander abgestimmt. Der genannte Abstand kann unterschiedlich ausfallen, je nachdem, ob es sich bei dem betreffenden Batteriezellen-Verbindungselement um ein Batteriezellen-Verbindungselement 4 mit gewelltem Bereich 4c oder ein Batteriezellen-Verbindungselement 4' ohne gewellten Bereich handelt (vgl. Figur 1). An einem oberen Rand der Ausnehmungen bzw. Fluidleitungsabschnitte 5b, 5b' ist jeweils eine umfänglich umlaufende Dichtung 5c vorgesehen, die als separates Dichtelement ausgebildet oder an das Batteriezellen-Verbindungsmodul 5 angeformt sein kann. Vergleichbare Dichtungen (nicht erkennbar) finden sich unten an dem Batteriezellen-Verbindungsmodul 5 im Bereich der Durchbrüche 5ba, 5bb, wo das Batteriezellen-Verbindungsmodul 5 mit den Batteriezellen-Verbindungselementen 4, 4' fluidleitend zusammenwirkt.

Die Fluidleitungsabschnitte 5b' sind gegenüber den Fluidleitungsabschnitten 5b länger ausgebildet und weisen jeweils einen zusätzlichen Durchbruch 5bc auf, der mit einer Zuleitung 5d bzw. mit einer Ausleitung 5e für ein Temperierfluid fluidleitend verbunden ist. Auf diese Weise kann ein Temperierfluid dem Batteriezellen-Verbindungsmodul 5 zugeführt und auch wieder aus diesem abgeführt werden. Die Fluidleitungsabschnitte 5b, 5b' ergänzen die unterhalb des Batteriezellen-Verbindungsmoduls 5 angeordneten Batteriezellen-Verbindungselemente 4 (vgl. Figuren 1 bis 3b) zu einem zweiflutigen, die Zuleitung 5d mit der Ausleitung 5e fluidleitend verbindenden Strömungskanal für das Temperierfluid. Dies ist in Figur 4 für einen Strömungszweig schematisch dargestellt, vgl. die (gestrichelten) Pfeile. Dabei symbolisieren die durchgezogenen Pfeile eine Strömung des Temperierfluids an der Oberseite des Batteriezellen-Verbindungsmoduls 5 durch die Fluidleitungsabschnitte 5b bzw. 5b', während die gestrichelten Pfeile in Figur 4 eine Strömung des Temperierfluids durch ein darunterliegendes Batteriezellen-Verbindungselement 4 gemäß den Figuren 1 bis 3b symbolisieren. Der Übergang des Temperierfluids von den Fluidleitungsabschnitten 5b, 5b' zu den Batteriezellen-Verbindungselementen 4 erfolgt jeweils durch die korrespondierenden bzw. kommunizierenden Durchbrüche, wie weiter oben beschrieben.

Auf diese Weise können die (in Figur 4 nicht erkennbaren) Zellableiter der Batteriezellen 2 einerseits elektrisch kontaktiert werden (vgl. Figur 1) und andererseits effizient temperiert (gekühlt) werden, wobei das Temperierfluid vorzugsweise nicht demselben mäanderförmigen Strömungsweg folgt, wie der anhand von Figur 1 illustrierte Stromfluss S.

Da sich die einzelnen Batteriezellen-Verbindungselemente 4, 4' gemäß den Figuren 1 bis 3b nicht berühren und die Fluidleitungsabschnitte 5b, 5b' gemäß Figur 4 zusammen mit dem restlichen Batteriezellen-Verbindungsmodul 5 in einem elektrisch nicht leitenden Kunststoff ausgebildet sind, kommt es auf diese Weise zu keinem elektrischen Kurzschluss der Batteriezellen-Anordnung 1 - vorteilhafterweise selbst dann nicht, wenn als Temperierfluid kein (kostspieliges) Dielektrikum verwendet wird.

Bei Bezugszeichen 5f und 5g weist das Batteriezellen-Verbindungsmodul 5 seitliche Ausnehmungen auf, durch die einzelne Batteriezellen-Verbindungsmodule 4, 4' von außen zugänglich sind. Derartige Batteriezellen-Verbindungsmodule 4, 4' können somit in einfacher Weise zum elektrischen Kontaktieren der gesamten Batteriezellen-Anordnung 1 verwendet werden.

Der schwarze Blockpfeil in Figur 4 korrespondiert mit den entsprechenden Blockpfeilen in Figur 3a und soll nochmals die Zugänglichkeit der Batteriezellen-Verbindungselemente 4, 4' von außen, also auch durch das Batteriezellen-Verbindungsmodul 5 bzw. die genannten Durchbrüche 5ba, 5bb hindurch symbolisieren. Es ist dabei im Rahmen der Erfindung möglich, zunächst die Batteriezellen-Verbindungselemente 4, 4' in oder an dem Batteriezellen-Verbindungsmodul 5 anzuordnen, die so geschaffene Batteriezellen-Verbindungsanordnung aus Batteriezellen-Verbindungselement 4, 4' und Batteriezellen-Verbindungsmodul 5 auf die Batteriezellen 2 bzw. die Batteriezellen-Anordnung 1 aufzusetzen und erst am Ende die einzelnen Batteriezellen-Verbindungselemente 4, 4' mit den darunterliegenden Zellableitern (nicht gezeigt) der Batteriezellen 2 zu verbinden, wie weiter oben bereits detailliert beschrieben. Dies verbessert die Handhabbarkeit und Montagefreundlichkeit enorm.

In diesem Zusammenhang kann auch vorgesehen sein, das PCB 6 in der zentralen Ausnehmung 5a des Batteriezellen-Verbindungsmoduls 5 anzuordnen und zusammen mit diesem auf die Batteriezellen-Anordnung 1 aufzusetzen. Vorteilhafterweise existieren im Inneren des Batteriezellen-Verbindungsmoduls 5 galvanische Verbindungen (in Figur 4 bei Bezugszeichen 6b exemplarisch gezeigt), die das PCB 6 bzw. bestimmte Elektronikbauteile 6a mit den Batteriezellen-Verbindungselementen 4, 4' und entsprechend den Zellableitern (nicht gezeigt) der Batteriezellen 2 elektrisch leitend verbinden können. Auf diese Weise kann das PCB 6 insbesondere dazu verwendet werden, ein Battery Management System (BMS) zu implementieren, ohne dass zu diesem Zweck nachträglich zeit- und kostenaufwendige Verkabelungen erforderlich wären.

Damit das Temperierfluid nicht aus den gemäß Figur 4 nach oben offenen Fluidleitungsabschnitten 5b, 5b' austreten kann, umfasst das Batteriezellen-Verbindungsmodul 5 gemäß Figur 5 noch ein Deckelteil 5h, welches Deckelteil 5h zumindest die Fluidleitungsabschnitte 5b, 5b', nicht jedoch die zentrale Ausnehmung 5a dicht verschließt, sodass kein Temperierfluid aus den Fluidleitungsabschnitten 5b, 5b' (vgl. Figur 4) austreten kann. Zu diesem Zweck treten insbesondere die bereits erwähnten Dichtungen 5c von unten mit dem Deckelteil 5h in Anlage. Wie das restliche Batteriezellen-Verbindungsmodul 5 besteht auch das Deckelteil 5h bevorzugt aus einem elektrisch nicht leitenden, spritzgussfähigen Kunststoff.

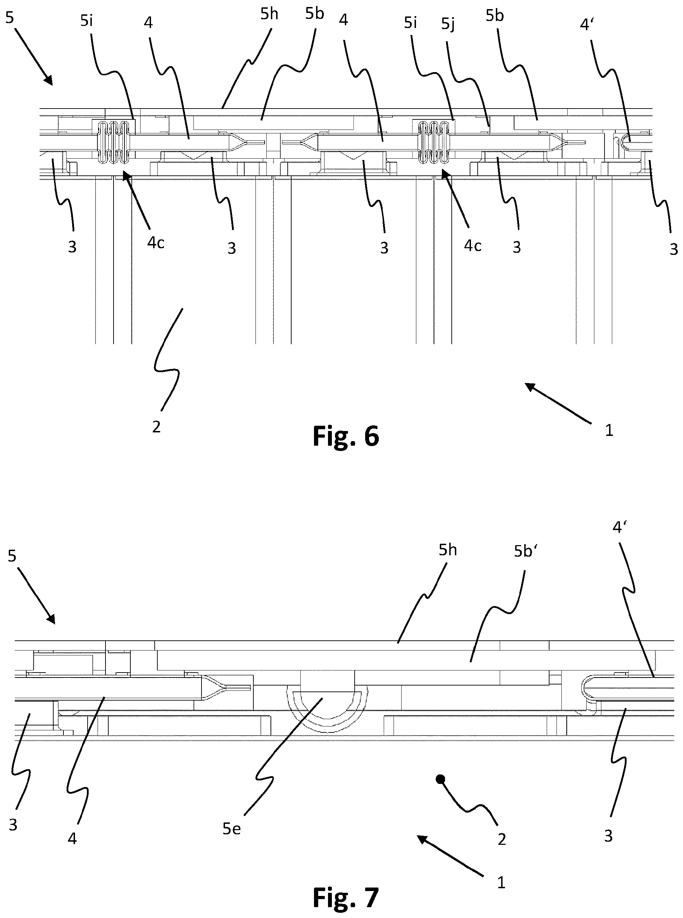

Die in den nachfolgenden Figuren 6 und 7 gezeigten Schnittansichten sind entlang der gestrichelten bzw. der strichpunktierten Linie in Figur 5 orientiert. Figur 6 zeigt einen Schnitt etwa gemäß der gestrichelten Linie in Figur 5. Gut erkennbar ist hier die (stoffschlüssige) Verbindung der Batteriezellen-Verbindungselemente 4 gemäß Figur 3a mit den darunterliegenden Zellableitern 3 der Batteriezellen 2. Gut erkennbar ist auch, wie das Deckelteil 5h die einzelnen Fluidleitungsabschnitte 5b nach oben hin abschließt bzw. abdichtet. Bezugszeichen 5i bezeichnet die bereits angesprochenen Aufnahmen für die Batteriezellen-Verbindungselemente 4, insbesondere im Bereich der gewellten Abschnitte 4c. Bezugszeichen 5j bezeichnet Niederhaltelemente, die dazu bestimmt sein können, die Batteriezellen-Verbindungselemente 4 definiert an den Zellableitern 3 in Anlage zu bringen, bevor eine stoffschlüssige Verbindung der Batteriezellen-Verbindungselemente 4 mit den Zellableitern 3 erfolgt. Bei bestimmten Ausgestaltungen kann eine solche stoffschlüssige Verbindung unter Umständen sogar entbehrlich sein, wenn bereits das Batteriezellen-Verbindungsmodul 5 für eine hinreichende feste, dauerhafte Fixierung der Batteriezellen-Verbindungselemente 4 mit den Zellableitern 3 sorgt.

Figur 7 zeigt eine entsprechende Schnittansicht etwa entlang der strichpunktierten Linie in Figur 5. Erkennbar ist hier insbesondere die Ausleitung für das Temperierfluid, vgl. Bezugszeichen 5e gemäß Figuren 4 und 5.

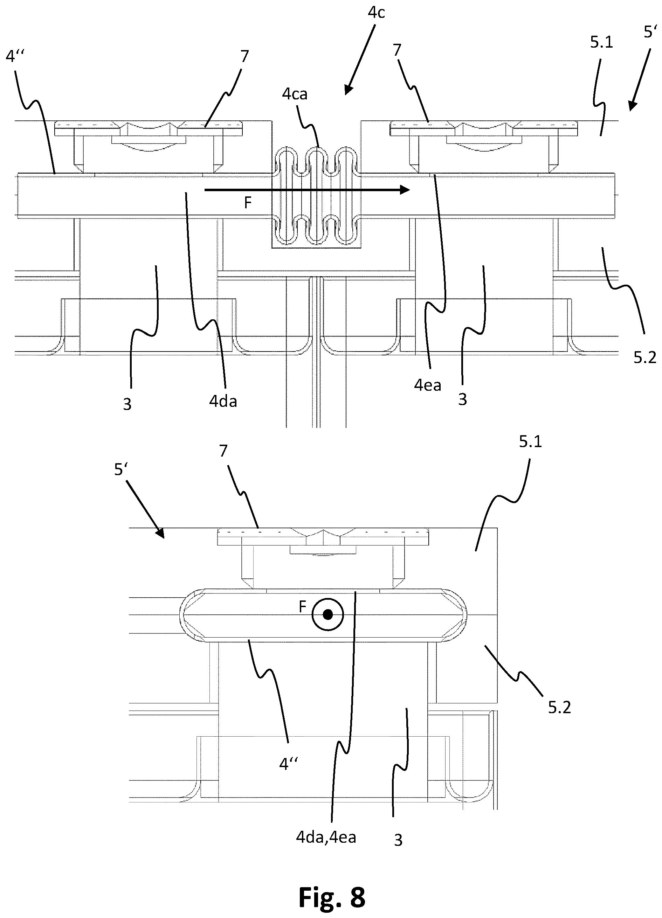

In Figur 8 ist oben ein alternatives Batteriezellen-Verbindungselement 4" mit offenen Enden im Längsschnitt dargestellt. Das zugehörige Batteriezellen-Verbindungsmodul 5' weist zwei (Kunststoff-)Halbschalen 5.1 (Oberschale) und 5.2 (Unterschale) auf, ist also zweiteilig ausgebildet. Das Temperierfluid fließt dann in Richtung der Längsachse, d.h. parallel zur Zeichenebene durch die Anordnung (Pfeil F). Unten ist der Querschnitt gezeigt. Die Batteriezellen-Verbindungselemente 4" liegen im Sandwich zwischen Oberschale 5.1 und Unterschale 5.2. Für das Werkzeug zur Anbindung der Batteriezellen-Ableiter können weiterhin Durchbrüche 4da, 4ea zwischen dem Bereich 4c und den Halbschalen 5.1, 5.2 vorhanden sein, werden aber nach Montage verschlossen (durch Stopfen oder dgl. aus einem elastischen Material, Bezugszeichen 7).

Auch eine Variante ohne Durchbrüche ist möglich; hier kann dann die Anbindung der Batteriezellen-Ableiter seitlich mittels einer Kehlschweißnaht erfolgen.

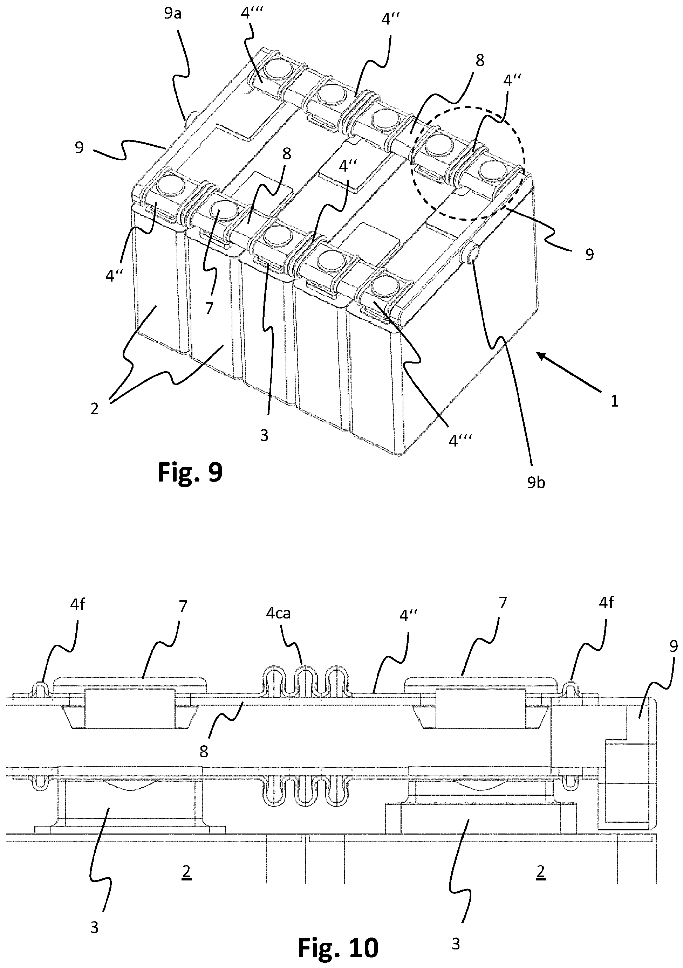

Figur 9 zeigt perspektivisch eine andere Ausgestaltung der Batteriezellen-Anordnung 1 mit einer Anzahl an Batteriezellen-Verbindungselementen 4", die im Wesentlichen gemäß Figur 8 ausgebildet sind. Bei Bezugszeichen 4‴ finden sich verkürzte (halbierte) Varianten dieser Verbindungselemente (ohne Balgwellen), welche nur jeweils einen Ableiter 3 abdecken. Auf beiden Seiten der Anordnung 1 sind die Verbindungselemente 4", 4‴ fluidleitend verbunden, in dem ein elektrisch isolierendes Leitungselement 8 aus Kunststoff durch alle betreffenden Verbindungselemente 4", 4‴ geführt ist. Die jeweiligen freien Enden der Leitungselemente 8 münden auf den Stirnseiten der Anordnung 1 in ein Sammelelement 9 mit Zuleitung 9a bzw. Ausleitung 9b (vgl. Figuren 4 und 5, dort Bezugszeichen 5d, 5e). Bevorzugt werden erst die Verbindungselemente 4", 4‴ angebracht (angeschweißt), wie zuvor beschrieben, und dann mit den Leitungselementen 8 ausgekleidet. Schließlich werden die Sammelelemente 9 angebracht. Korrespondierende Durchbrüche in den Verbindungselementen 4", 4‴ (vgl. Figur 8) und in den Leitungselementen werden gemeinsam mit Stopfen 7 verschlossen, vgl. auch Figuren 10 bis 12.

Figur 10 zeigt einen Längsschnitt durch die Anordnung 1 gemäß Figur 9, etwa im Bereich des dort gestrichelt eingezeichneten Kreises. Neu bezeichnet sind in Figur 10 endständig um das Verbindungselement 4" umlaufende Klebewelle 4f, die mit einem Kleb- und Dichtstoff gefüllt sind (nicht gezeigt), um das Leitungselement 8 fluiddicht und stoffschlüssig mit dem Verbindungselement 4" zu verbinden.

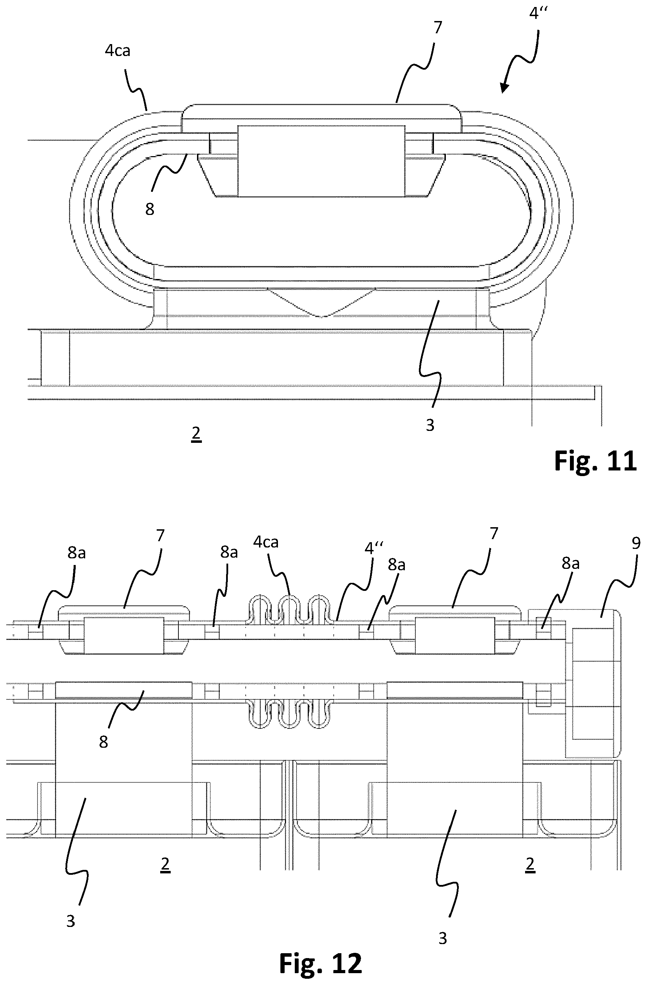

Figur 11 zeigt einen Querschnitt durch das Verbindungselement 4" etwa in demselben Bereich.

Figur 12 zeigt eine alternative Ausgestaltung, wobei die Art der Darstellung der Figur 10 entspricht. Allerdings wiest hier nicht das Verbindungselement 4" Klebewellen auf, sondern an dem Leitungselement 8 sind umfängliche Klebenuten oder -Rinnen 8a angeordnet, die denselben Zweck erfüllen.

## Patentansprüche

1. Batteriezellen-Verbindungselement (4, 4') mit einem als Fluidleitungselement ausgebildeten Grundkörper (44) aus einem elektrisch leitenden Werkstoff mit einer Längsachse (L), welcher Grundkörper (44) an seinen beiden Enden (4a, 4b) vorzugsweise verschlossen ist, insbesondere fluiddicht, und eine umfänglich im Wesentlichen geschlossene Mantelwandung aufweist, in welcher Mantelwandung auf einer selben Seite des Grundkörpers (44) wenigstens zwei Durchbrüche (4da, 4ea), vorzugsweise Ausstanzungen, angeordnet sind, welche Durchbrüche (4da, 4ea) in Richtung der Längsachse (L) versetzt nebeneinander angeordnet sind,
**dadurch gekennzeichnet, dass**
der Grundkörper (44) zumindest an seiner den Durchbrüchen (4da, 4ea) gegenüberliegenden Seite abschnittweise im Wesentlichen eben ausgebildet ist, so dass ebene Abschnitte (4d', 4e') des Grundkörpers (44) in einer Richtung quer zu der Längsachse (L) mit den Durchbrüchen (4da, 4ea) fluchten, bei dem vorzugsweise der Grundkörper (44) zwei abschnittweise im Wesentlichen ebene, parallel zueinander angeordnete Seitenwände (4d, 4e, 4d', 4e') aufweist, in einer von denen die Durchbrüche (4da, 4ea) angeordnet sind.

2. Batteriezellen-Verbindungselement (4, 4') nach Anspruch 1, bei dem der Grundkörper (44) entlang seiner Längsachse (L) zwei im Wesentlichen gleiche Hälften aufweist, zwischen denen ein Mittelabschnitt (4c) mit veränderter Formgebung angeordnet ist, welcher Mittelabschnitt (4c) vorzugsweise wenigstens eine umfänglich umlaufenden Balgwelle (4ca) aufweist, höchst vorzugsweise mehrere solche Balgwellen (4ca), und dabei vorzugsweise einstückig mit dem restlichen Grundkörper (44) ausgebildet ist.

3. Batteriezellen-Verbindungsmodul (5) mit wenigstens zwei Aufnahmen (5i), welche Aufnahmen (5i) zum formschlüssigen und/oder kraftschlüssigen Aufnehmen jeweils eines Batteriezellen-Verbindungselements (4, 4') nach einem der vorhergehenden Ansprüche ausgebildet sind, und mit einem Fluidleitungsabschnitt (5b, 5b'), welcher Fluidleitungsabschnitt (5b, 5b') eine Fluidzuleitung (5ba) und eine Fluidausleitung (5bb) aufweist, bei dem zumindest der Fluidleitungsabschnitt (5b, 5b') in einem elektrisch nichtleitenden Werkstoff, bevorzugt Kunststoff, ausgebildet ist und bei dem die Fluidzuleitung (5ba) und die Fluidausleitung (5bb) derart relativ zu den Aufnahmen (5i) angeordnet sind, dass die Fluidzuleitung (5ba) mit der einen Aufnahme (5i) und die Fluidausleitung (5bb) mit der anderen Aufnahme (5i) in fluidleitender Verbindung steht.

4. Batteriezellen-Verbindungsmodul (5) nach Anspruch 3 mit einer ersten Anzahl von mehr als zwei Aufnahmen (5i) und mit einer zweiten Anzahl von mehr als einem Fluidleitungsabschnitt (5b, 5b'), bei der jeder Fluidleitungsabschnitt (5b, 5b') immer mindestens zwei Aufnahmen (5i) fluidleitend verbindet, bei dem die Fluidleitungsabschnitte (5b, 5b') und/oder die Aufnahmen (5i) in oder parallel zu jeweils einer gemeinsamen Ebene verlaufen und/oder über dem Umfang eines Rechtecks verteilt angeordnet sind, und bei dem vorzugsweise ein erster Fluidleitungsabschnitt (5b') eine Zuleitung (5d) für ein Temperierfluid zu dem ersten Fluidleitungsabschnitt 5b') und ein zweiter Fluidleitungsabschnitt (5b') eine Ausleitung (5e) für ein Temperierfluid aus dem zweiten Fluidleitungsabschnitt (5b') aufweist.

5. Batteriezellen-Verbindungsmodul (5) nach Anspruch 3 oder 4, bei dem der Fluidleitungsabschnitt (5b, 5b') oder die Fluidleitungsabschnitte (5b, 5b') an einer ersten Seite des Batteriezellen-Verbindungsmoduls (5) offen sind und bei dem die Aufnahmen (5i) an einer der ersten Seite abgewandten zweiten Seite des Batteriezellen-Verbindungsmoduls (5) angeordnet sind, und mit wenigstens einem Deckelteil (5h), welches Deckelteil (5h) den wenigstens einen Fluidleitungsabschnitt (5b, 5b'), vorzugsweise mehrere Fluidleitungsabschnitte (5b, 5b'), höchst vorzugsweise alle Fluidleitungsabschnitte (5b, 5b'), nach außen fluiddicht abschließt, wobei das Deckelteil vorzugsweise über ein Filmscharnier mit dem Batteriezellen-Verbindungsmodul (5) verbunden ist.

6. Batteriezellen-Verbindungsmodul (5) nach einem der Ansprüche 3 bis 5 mit einer weiteren Aufnahme (5a) zum Aufnehmen einer Elektronikplatine (6), welche weitere Aufnahme (5a) vorzugsweise von den Aufnahmen (5i) für die Batteriezellen-Verbindungselemente (4, 4') und von den Fluidleitungsabschnitten (5b, 5b') gemäß Anspruch 5 umgeben ist.

7. Batteriezellen-Verbindungsmodul (5) nach Anspruch 6, bei dem von der weiteren Aufnahme (5a) galvanische Verbindungen (6b) sich zu den Aufnahmen (5i) für die Batteriezellen-Verbindungselemente (4, 4') erstrecken, welche Verbindungen (6b) vorzugsweise durch Aufdrucken, beispielsweise mittels Siebdruck oder Tampondruck, von Leiterbahnen auf das Batteriezellen-Verbindungsmodul (5) ausgebildet sind.

8. Batteriezellen-Verbindungsanordnung mit wenigstens einem ersten Batteriezellen-Verbindungselement (4, 4') nach Anspruch 1 oder 2, mit wenigstens einem zweiten Batteriezellen-Verbindungselement (4, 4') nach Anspruch 1 oder 2 und mit wenigstens einem Batteriezellen-Verbindungsmodul (5) nach einem der Ansprüche 3 bis 7, bei dem das erste Batteriezellen-Verbindungselement (4, 4') und das zweite Batteriezellen-Verbindungselement (4, 4') jeweils in einer betreffenden Aufnahme (5i) angeordnet sind, sodass einerseits das erste Batteriezellen-Verbindungselement (4, 4') mit einem seiner Durchbrüche (4da, 4ea) mit der Fluidzuleitung (5ba) und andererseits die Fluidausleitung (5bb) mit einem der Durchbrüche (4da, 4ea) des zweiten Batteriezellen-Verbindungselements (4, 4') in fluidleitender Verbindung steht oder sodass die beiden Batteriezellen-Verbindungselemente (4, 4') über einen ihrer Durchbrüche (4da, 4ea) und über den Fluidleitungsabschnitt (5b, 5b') miteinander in fluidleitender Verbindung stehen, wobei in jedem Fall die beiden Batteriezellen-Verbindungselemente (4, 4') voneinander beabstandet sind.

9. Batteriezellen-Verbindungsanordnung nach Anspruch 8 mit einem Batteriezellen-Verbindungsmodul (5) nach Anspruch 4, bei der die Batteriezellen-Verbindungselemente (4, 4') und die Fluidleitungsabschnitte (5b, 5b') gemeinsam einen geschlossenen Fluidkreislauf bilden, vorzugsweise und bei Rückbezug auf Anspruch 5 zusammen mit dem Deckelteil (5h) und höchst vorzugsweise ausgenommen die Zuleitung (5d) und die Ausleitung (5e).

10. Batteriezellen-Verbindungsanordnung nach Anspruch 8 oder 9 mit einem Batteriezellen-Verbindungsmodul (5) nach Anspruch 6 und mit einer in der weiteren Aufnahme (5a) aufgenommenen Elektronikplatine (6), welche Elektronikplatine (6) vorzugsweise Elektronikbauteile (6a) zur Steuerung des Betriebs einer Batteriezellen-Anordnung (1) aus mehreren Batteriezellen (2) aufweist, bei der höchst vorzugsweise die Elektronikplatine (6) und/oder wenigstens einige der Elektronikbauteile (6a) über die galvanischen Verbindungen (6b) die Batteriezellen-Verbindungselemente (4, 4') elektrisch kontaktieren.

11. Batteriezellen-Anordnung (1) mit mehreren Batteriezellen (2) und mit einer Batteriezellen-Verbindungsanordnung nach einem der Ansprüche 8 bis 10, bei der die einzelnen Batteriezellen (2) jeweils einen ersten Zellableiter (3) mit einer ersten elektrischen Polung und einen zweiten Zellableiter (3) mit einer zweiten elektrischen Polung aufweisen, bei der der erste Zellableiter (3) einer Batteriezelle (2) über ein Batteriezellen-Verbindungselement (4) mit dem zweiten Zellableiter (3) einer anderen Batteriezelle (2) elektrisch leitend verbunden ist, bei der das erste Batteriezellen-Verbindungselement (4) mit dem zweiten Batteriezellen-Verbindungselement (4) über den Fluidleitungsabschnitt (5b) fluidleitend verbunden ist, und bei der vorzugsweise die Batteriezellen-Verbindungselemente (4, 4') stoffschlüssig mit den Zellableitern (3) verbunden sind.

12. Batteriezellen-Anordnung (1) nach Anspruch 11, bei der die Batteriezellen-Verbindungselemente (4, 4') und der Fluidleitungsabschnitt (5b, 5b') oder die Fluidleitungsabschnitte (5b, 5b') mit einem Temperierfluid gefüllt oder von einem Temperierfluid durchströmt sind.

13. Verfahren zum Temperieren und elektrischen Kontaktieren von Batteriezellen (2) einer Batteriezellen-Anordnung (1), beinhaltend:
a) Bereitstellen von Batteriezellen-Verbindungselementen (4, 4') gemäß Anspruch 1 oder 2;
b) Bereitstellen von einem Batteriezellen-Verbindungsmodul (5) gemäß einem der Ansprüchen 3 bis 7;
c) Anordnen der Batteriezellen-Verbindungselemente (4, 4') in dem Batteriezellen-Verbindungsmodul (5) zum Schaffen einer Batteriezellen-Verbindungsanordnung gemäß einem der Ansprüche 8 bis 10;
d) Herstellen der Batteriezellen-Anordnung (1) gemäß Anspruch 11 oder 12 durch Anbringen der Batteriezellen-Verbindungsanordnung an einer Anordnung von Batteriezellen (2) und elektrisch leitendes, vorzugsweise stoffschlüssiges Verbinden der Batteriezellen-Verbindungselemente (4, 4') mit den Zellableitern (3);
e) Durchströmen der Batteriezellen-Verbindungselemente (4, 4') und des Fluidleitungsabschnitts (5b, 5b') oder der Fluidleitungsabschnitte (5b, 5b') mit einem Temperierfluid; und
f) elektrisches Kontaktieren der Batteriezellen (2) über die Batteriezellen-Verbindungselemente (4, 4').

14. Verfahren nach Anspruch 13, bei dem in Schritt d) die Batteriezellen-Verbindungselemente (4, 4') durch die Fluidzuleitung (5ba) oder die Fluidausleitung (5bb) und über die jeweiligen Durchbrüche (4da, 4ea) von außen mit den Zellableitern (3) verbunden werden, bevorzugt verschweißt, und bei dem anschließend, vor Schritt e), das Deckelteil (5h) gemäß Anspruch 5 zum Verschließen der Batteriezellen-Verbindungsanordnung aufgesetzt wird.

## Claims

1. Battery cell connection element (4, 4') having a main body (44) in the form of a fluid conduit element made from an electrically conductive material with a longitudinal axis (L), which main body (44) is preferably closed at its two ends (4a, 4b), in particular in a fluid-tight manner, and has a peripherally substantially closed casing wall, in which casing wall at least two apertures (4da, 4ea), preferably punch-puts, are arranged on the same side of the main body (44), which apertures (4da, 4ea) are arranged next to one another and offset in the direction of the longitudinal axis (L),
**characterized in that**
the main body (44) is configured to be substantially flat in some sections, at least on its side opposite the apertures (4da, 4ea), so that flat sections (4d', 4e') of the main body (44) are in alignment with the apertures (4da, 4ea) in a direction perpendicular to the longitudinal axis (L), in which preferably the main body (44) has two substantially flat side walls (4d, 4e, 4d', 4e') arranged parallel to one another in some sections, in one of which the apertures (4da, 4ea) are arranged.

2. Battery cell connection element (4, 4') according to claim 1, in which the main body (44) has two essentially identical halves along its longitudinal axis (L) between which a central section (4c) with a modified shape is arranged, which central section (4c) preferably has at least one circumferential bellows shaft (4ca), most preferably a plurality of such bellows shafts (4ca), and is preferably formed in one piece with the rest of the main body (44).

3. Battery cell connection module (5) having at least two mounts (5i), which mounts (5i) are each configured to each receive a battery cell connection element (4, 4') according to any one of the preceding claims in a form-fitting and/or force-fitting manner, and a fluid conduit section (5b, 5b'), which fluid conduit section (5b, 5b') has a fluid feed line (5ba) and a fluid outlet line (5bb), in which at least the fluid conduit section (5b, 5b') is made from an electrically non-conductive material, preferably plastic, and in which the fluid feed line (5ba) and the fluid outlet line (5bb) are arranged relative to the mounts (5i) such that the fluid feed line (5ba) is in fluidic connection with one mount (5i) and the fluid outlet line (5bb) is in fluidic connection with the other mount (5i).

4. Battery cell connection module (5) according to claim 3 having a first number of more than two mounts (5i) and a second number of more than one fluid conduit section (5b, 5b'), in which each fluid conduit section (5b, 5b') always fluidically connects at least two mounts (5i), in which the fluid conduit sections (5b, 5b') and/or the mounts (5i) extend in or parallel to a common plane respectively and/or are arranged distributed around the circumference of a rectangle, and in which preferably a first fluid conduit section (5b') has a feed line (5d) for a temperature control fluid to the first fluid conduit section (5b') and a second fluid conduit section (5b') has an outlet line (5e) for a temperature control fluid from the second fluid conduit section (5b').

5. Battery cell connection module (5) according to claim 3 or 4, in which the fluid conduit section (5b, 5b') or the fluid conduit sections (5b, 5b') are open on a first side of the battery cell connection module (5) and in which the mounts (5i) are arranged on a second side of the battery cell connection module (5) facing away from the first side, and with at least one cover part (5h), which cover part (5h) closes the at least one fluid conduit section (5b, 5b'), preferably a plurality of fluid conduit sections (5b, 5b'), most preferably all fluid conduit sections (5b, 5b'), to the outside in a fluid-tight manner, wherein the cover part is preferably connected to the battery cell connection module (5) via a film hinge.

6. Battery cell connection module (5) according to any one of claims 3 to 5 having a further mount (5a) for receiving an electronic board (6), which further mount (5a) is preferably surrounded by the mounts (5i) for the battery cell connection elements (4, 4') and by the fluid conduit sections (5b, 5b') according to claim 5.

7. Battery cell connection module (5) according to claim 6, in which galvanic connections (6b) extend from the further mount (5a) to the mounts (5i) for the battery cell connection elements (4, 4'), which connections (6b) are preferably formed by printing, for example screen printing or pad printing, conductor tracks onto the battery cell connection module (5).

8. Battery cell connection arrangement having at least one first battery cell connection element (4, 4') according to claim 1 or 2, at least one second battery cell connection element (4, 4') according to claim 1 or 2 and at least one battery cell connection module (5) according to any one of claims 3 to 7, in which the first battery cell connection element (4, 4') and the second battery cell connection element (4, 4') are each arranged in a respective mount (5i), so that, on the one hand, the first battery cell connection element (4, 4') is in fluidic connection with one of its apertures (4da, 4ea) with the fluid feed line (5ba) and, on the other hand, the fluid outlet line (5bb) is in fluidic connection with one of the apertures (4da, 4ea) of the second battery cell connection element (4, 4'), or so that the two battery cell connection elements (4, 4') are in fluidic connection with one another via one of their apertures (4da, 4ea) and via the fluid conduit section (5b, 5b'), wherein in each case the two battery cell connection elements (4, 4') are spaced apart from one another.

9. Battery cell connection arrangement according to claim 8 having a battery cell connection module (5) according to claim 4, in which the battery cell connection elements (4, 4') and the fluid conduit sections (5b, 5b') together form a closed fluid circuit, preferably and with reference back to claim 5, together with the cover part (5h) and most preferably excluding the feed line (5d) and the outlet line (5e).

10. Battery cell connection arrangement according to claim 8 or 9 having battery cell connection module (5) according to claim 6 and an electronic board (6) accommodated in the further mount (5a), which electronic board (6) preferably has electronic components (6a) for controlling the operation of a battery cell arrangement (1) with a plurality of battery cells (2), in which most preferably the electronic board (6) and/or at least some of the electronic components (6a) electrically contact the battery cell connection elements (4, 4') via the galvanic connections (6b).

11. Battery cell arrangement (1) having a plurality of battery cells (2) and a battery cell connection arrangement according to any one of claims 8 to 10, in which the individual battery cells (2) each have a first cell arrester (3) with a first electrical polarity and a second cell arrester (3) with a second electrical polarity, in which the first cell arrester (3) of a battery cell (2) is connected electrically conductively to the second cell arrester (3) of another battery cell (2) via a battery cell connection element (4), in which the first battery cell connection element (4) is connected in a fluidic manner to the second battery cell connection element (4) via the fluid conduit section (5b), and in which preferably the battery cell connection elements (4, 4') are connected to the cell arresters (3) in a materially-bonded manner.

12. Battery cell arrangement (1) according to claim 11, in which the battery cell connection elements (4, 4') and the fluid conduit section (5b, 5b') or the fluid conduit sections (5b, 5b') are filled with a temperature control fluid or are flowed through by a temperature control fluid.

13. Method for controlling the temperature and for electrically contacting battery cells (2) of a battery cell arrangement (1), including:
a) providing battery cell connection elements (4, 4') according to claim 1 or 2;
b) providing a battery cell connection module (5) according to any one of claims 3 to 7;
c) arranging the battery cell connection elements (4, 4') in the battery cell connection module (5) to create a battery cell connection arrangement according to any one of claims 8 to 10;
d) manufacturing the battery cell arrangement (1) according to claim 11 or 12 by attaching the battery cell connection arrangement on an arrangement of battery cells (2) and electrically connecting the battery cell connection elements (4, 4') to the cell arresters (3), preferably in a materially-bonded manner;
e) flowing a temperature control fluid through the battery cell connection elements (4, 4') and the fluid conduit section (5b, 5b') or the fluid conduit sections (5b, 5b'); and
f) electrically contacting the battery cells (2) via the battery cell connection elements (4, 4').

14. Method according to claim 13, in which in step d) the battery cell connection elements (4, 4') are connected, preferably welded, to the cell arresters (3) from the outside through the fluid feed line (5ba) or the fluid outlet line (5bb) and via the respective apertures (4da, 4ea), and in which, subsequently, before step e), the cover part (5h) according to claim 5 is fitted to close the battery cell connection arrangement.

## Revendications

1. Élément de liaison de cellule de batterie (4, 4') avec un corps de base (44) formé comme élément d'acheminement de fluide en un matériau électroconducteur avec un axe longitudinal (L), lequel corps de base (44) est de préférence fermé à ses deux extrémités (4a, 4b), en particulier de manière étanche aux fluides, et présente une paroi de matériau fermée sensiblement sur la périphérie, dans laquelle paroi de matériau sont disposés sur un même côté du corps de base (44) au moins deux perforations (4da, 4ea), de préférence découpages, lesquelles perforations (4da, 4ea) sont disposées l'une à côté de l'autre et en déport en direction de l'axe longitudinal (L),
**caractérisé en ce que**
le corps de base (44) est formé au moins par sections sensiblement plan au niveau de son côté opposé aux perforations (4da, 4ea) de sorte que des sections planes (4d', 4e') du corps de base (44) s'alignent sur les perforations (4da, 4ea) dans une direction transversale à l'axe longitudinal (L), pour lequel le corps de base (44) présente de préférence deux parois latérales (4d, 4e, 4d', 4e') disposées parallèlement l'une à l'autre, par sections sensiblement planes, dans l'une desquelles sont disposées les perforations (4da, 4ea).

2. Élément de liaison de cellule de batterie (4, 4') selon la revendication 1, pour lequel le corps de base (44) présente le long de son axe longitudinal (L) deux moitiés sensiblement identiques, entre lesquelles une section centrale (4c) avec un formage modifié est disposée, laquelle section centrale (4c) présente de préférence au moins un arbre à soufflet (4ca) tournant sur la périphérie, le plus préférentiellement plusieurs arbres à soufflet (4ca) de la sorte, et est de préférence formée d'un seul tenant avec le corps de base (44) restant.

3. Module de liaison de cellule de batterie (5) avec au moins deux logements (5i), lesquels logements (5i) sont formés pour la réception par complémentarité de formes et/ou à force respectivement d'un élément de liaison de cellule de batterie (4, 4') selon l'une quelconque des revendications précédentes, et avec une section d'acheminement de fluide (5b, 5b'), laquelle section d'acheminement de fluide (5b, 5b') présente une conduite d'alimentation de fluide (5ba) et une conduite d'évacuation de fluide (5bb), pour lequel au moins la section d'acheminement de fluide (5b, 5b') est formée dans un matériau non électroconducteur, de préférence une matière plastique, et pour lequel la conduite d'alimentation de fluide (5ba) et la conduite d'évacuation de fluide (5bb) sont disposées par rapport aux logements (5i) de telle manière que la conduite d'alimentation de fluide (5ba) soit en liaison d'acheminement de fluide avec un logement (5i) et la conduite d'évacuation de fluide (5bb) avec l'autre logement (5i).

4. Module de liaison de cellule de batterie (5) selon la revendication 3 avec un premier nombre de plus de deux logements (5i) et avec un second nombre de plus d'une section d'acheminement de fluide (5b, 5b'), pour lequel chaque section d'acheminement de fluide (5b, 5b') relie en acheminement de fluide toujours au moins deux logements (5i), pour lequel les sections d'acheminement de fluide (5b, 5b') et/ou les logements (5i) s'étendent dans ou parallèlement à respectivement un plan commun et/ou sont disposés répartis sur la périphérie d'un rectangle, et pour lequel de préférence une première section d'acheminement de fluide (5b') présente une conduite d'alimentation (5d) pour un fluide de contrôle de la température vers la première section d'acheminement de fluide (5b') et une seconde section d'acheminement de fluide (5b') présente une conduite d'évacuation (5e) pour un fluide de contrôle de la température hors de la seconde section d'acheminement de fluide (5b').

5. Module de liaison de cellule de batterie (5) selon la revendication 3 ou 4, pour lequel la section d'acheminement de fluide (5b, 5b') ou les sections d'acheminement de fluide (5b, 5b') sont ouvertes au niveau d'un premier côté du module de liaison de cellule de batterie (5) et pour lequel les logements (5i) sont disposés au niveau d'un second côté éloigné du premier côté du module de liaison de cellule de batterie (5), et avec au moins une partie de couvercle (5h), laquelle partie de couvercle (5h) ferme de manière étanche aux fluides vers l'extérieur la au moins une section d'acheminement de fluide (5b, 5b'), de préférence plusieurs sections d'acheminement de fluide (5b, 5b'), le plus préférentiellement toutes les sections d'acheminement de fluide (5b, 5b'), dans lequel la partie de couvercle est de préférence reliée au module de liaison de cellule de batterie (5) par le biais d'une charnière à film.

6. Module de liaison de cellule de batterie (5) selon l'une quelconque des revendications 3 à 5 avec un autre logement (5a) pour la réception d'une carte électronique (6), lequel autre logement (5a) est de préférence entouré par les logements (5i) pour les éléments de liaison de cellule de batterie (4, 4') et par les sections d'acheminement de fluide (5b, 5b') selon la revendication 5.

7. Module de liaison de cellule de batterie (5) selon la revendication 6, pour lequel des liaisons galvaniques (6b) s'étendent de l'autre logement (5a) vers les logements (5i) pour les éléments de liaison de cellule de batterie (4, 4'), lesquelles liaisons (6b) sont formées de préférence par impression, par exemple par sérigraphie ou tampongraphie, de pistes conductrices sur le module de liaison de cellule de batterie (5).

8. Ensemble de liaison de cellule de batterie avec au moins un premier élément de liaison de cellule de batterie (4, 4') selon la revendication 1 ou 2, avec au moins un second élément de liaison de cellule de batterie (4, 4') selon la revendication 1 ou 2 et avec au moins un module de liaison de cellule de batterie (5) selon l'une quelconque des revendications 3 à 7, pour lequel le premier élément de liaison de cellule de batterie (4, 4') et le second élément de liaison de cellule de batterie (4, 4') sont disposés respectivement dans un logement respectif (5i) de sorte que d'une part le premier élément de liaison de cellule de batterie (4, 4') soit en liaison d'acheminement de fluide avec l'une de ses perforations (4da, 4ea) avec la conduite d'alimentation en fluide (5ba) et d'autre part la conduite d'évacuation de fluide (5bb) soit en liaison d'acheminement de fluide avec l'une des perforations (4da, 4ea) du second élément de liaison de cellule de batterie (4, 4') ou de sorte que les deux éléments de liaison de cellule de batterie (4, 4') soient en liaison d'acheminement de fluide l'un avec l'autre par le biais d'une de leurs perforations (4da, 4ea) et par le biais de la section d'acheminement de fluide (5b, 5b'), dans lequel les deux éléments de liaison de cellule de batterie (4, 4') sont espacés l'un de l'autre dans chaque cas.

9. Ensemble de liaison de cellule de batterie selon la revendication 8 avec un module de liaison de cellule de batterie (5) selon la revendication 4, pour lequel les éléments de liaison de cellule de batterie (4, 4') et les sections d'acheminement de fluide (5b, 5b') forment ensemble un circuit de fluide fermé, de préférence et en référence à la revendication 5 conjointement avec la partie de couvercle (5h) et le plus préférentiellement à l'exception de la conduite d'alimentation (5d) et de la conduite d'évacuation (5e).

10. Ensemble de liaison de cellule de batterie selon la revendication 8 ou 9 avec un module de liaison de cellule de batterie (5) selon la revendication 6 et avec une carte électronique (6) reçue dans l'autre logement (5a), laquelle carte électronique (6) présente de préférence des composants électroniques (6a) pour la commande du fonctionnement d'un ensemble de cellule de batterie (1) composé de plusieurs cellules de batterie (2), pour lequel le plus préférentiellement, la carte électronique (6) et/ou au moins certains des composants électroniques (6a) sont en contact électrique avec les éléments de liaison de cellule de batterie (4, 4') par le biais des liaisons galvaniques (6b).

11. Ensemble de cellule de batterie (1) avec plusieurs cellules de batterie (2) et avec un ensemble de liaison de cellule de batterie selon l'une quelconque des revendications 8 à 10, pour lequel les différentes cellules de batterie (2) présentent respectivement un premier collecteur de cellule (3) avec une première polarité électrique et un second collecteur de cellule (3) avec une seconde polarité électrique, pour lequel le premier collecteur de cellule (3) d'une cellule de batterie (2) est relié de manière électroconductrice au second collecteur de cellule (3) d'une autre cellule de batterie (2) par le biais d'un élément de liaison de cellule de batterie (4), pour lequel le premier élément de liaison de cellule de batterie (4) est relié en acheminement de fluide au second élément de liaison de cellule de batterie (4) par le biais de la section d'acheminement de fluide (5b), et pour lequel les éléments de liaison de cellule de batterie (4, 4') sont de préférence reliés par accouplement de matière aux collecteurs de cellule (3).

12. Ensemble de cellule de batterie (1) selon la revendication 11, pour lequel les éléments de liaison de cellule de batterie (4, 4') et la section d'acheminement de fluide (5b, 5b') ou les sections d'acheminement de fluide (5b, 5b') sont remplies d'un fluide de contrôle de la température ou sont traversées par un fluide de contrôle de la température.

13. Procédé de contrôle de la température et de mise en contact électrique de cellules de batterie (2) d'un ensemble de cellule de batterie (1) contenant :
a) la fourniture d'éléments de liaison de cellule de batterie (4, 4') selon la revendication 1 ou 2 ;
b) la fourniture d'un module de liaison de cellule de batterie (5) selon l'une quelconque des revendications 3 à 7 ;
c) la disposition des éléments de liaison de cellule de batterie (4, 4') dans le module de liaison de cellule de batterie (5) pour créer un ensemble de liaison de cellule de batterie selon l'une quelconque des revendications 8 à 10 ;
d) la fabrication de l'ensemble de cellule de batterie (1) selon la revendication 11 ou 12 par fixation de l'ensemble de liaison de cellule de batterie au niveau d'un ensemble de cellule de batterie (2) et liaison électroconductrice, de préférence par accouplement de matière, des éléments de liaison de cellule de batterie (4, 4') avec les collecteurs de cellule (3) ;
e) la traversée des éléments de liaison de cellule de batterie (4, 4') et de la section d'acheminement de fluide (5b, 5b') ou des sections d'acheminement de fluide (5b, 5b') avec un fluide de contrôle de la température ; et
f) la mise en contact électrique des cellules de batterie (2) par le biais des éléments de liaison de cellule de batterie (4, 4').

14. Procédé selon la revendication 13, pour lequel à l'étape d), les éléments de liaison de cellule de batterie (4, 4') sont reliés, de préférence soudés, aux collecteurs de cellule (3) depuis l'extérieur par la conduite d'alimentation en fluide (5ba) ou la conduite d'évacuation de fluide (5bb) et par le biais des perforations (4da, 4ea) respectives et pour lequel ensuite, avant l'étape e), la partie de couvercle (5h) selon la revendication 5 est placée pour fermer l'ensemble de liaison d'élément de cellule.
